# EUROPEAN PATENT APPLICATION

(11) **EP 4 841 224 A1**
(43) Date of publication of application: **18.11.2026**
(21) Application number: 24932575.4
(22) Date of filing: 23.12.2024
(51) Int. Cl.: G01J 3/24, G02B 5/20

(54) **SPECTROSCOPIC MEASUREMENT SYSTEM**

(30) Priority: 26.03.2024 JP 2024049304
(71) Applicant: Hamamatsu Photonics K.K., Hamamatsu-shi, Shizuoka 435-8558 (JP)
(72) Inventor: ARATA Ikuo, Hamamatsu-shi, Shizuoka 435-8558 (JP); TSUCHIYA Kunihiko, Hamamatsu-shi, Shizuoka 435-8558 (JP); OHTSUKA Kenichi, Hamamatsu-shi, Shizuoka 435-8558 (JP)
(74) Representative: Grünecker Patent- und Rechtsanwälte PartG mbB
(86) International application number: PCT/JP2024/045500
(87) International publication number: WO 2025/203942

(57) **Abstract**

A spectroscopic measurement system includes a light irradiation portion, a spectroscopic portion, a light detection portion that detects light spectrally separated by the spectroscopic portion, the light detection portion having sensitivity in a first wavelength range and a second wavelength range shorter than the first wavelength range, and a processing portion, and includes a wavelength switching means capable of switching a detection state between a first state in which a first light having a wavelength in the first wavelength range is incident on the spectroscopic portion and an Nth-order diffracted light of the first light is detected by the light detection portion, and a second state in which a second light having a wavelength in the second wavelength range is incident on the spectroscopic portion and an Mth-order diffracted light of the second light is detected by the light detection portion. Here, N and M are integers other than 0 where an absolute value of N is smaller than an absolute value of M. The processing portion generates a spectroscopic image based on the Nth-order diffracted light and the Mth-order diffracted light.

## Description

### Technical Field

One aspect of the present disclosure relates to a spectroscopic measurement system.

### Background Art

Patent Documents 1 and 2 describe a spectroscopic device that spectrally separates incident light using a diffraction grating, and that detects the spectrally separated light using a light detection portion.

### Citation List

### Patent Literature

[Patent Literature 1]: Japanese Unexamined Patent Publication No. S57-111422
[Patent Literature 2]: Japanese Unexamined Patent Publication No. H8-254464

### Summary of Invention

### Technical Problem

In the spectroscopic device as described above, widening the detectable wavelength range may be required. However, it is difficult to enable the diffraction grating to diffract light in a wide wavelength range, and even if a diffraction grating capable of diffracting light in a wide wavelength range can be realized, it is concerned that the diffraction efficiency is low. In addition, regarding the light detection portion as well, it is difficult to manufacture a detection element having a wide detectable wavelength range, and the size of such a detection element tends to be small. For this reason, there is a risk that the dynamic range and wavelength resolution are reduced. Furthermore, when the detectable wavelength range is wide, the width per unit wavelength (pitch) in the light detection portion becomes narrow, which may also cause a reduction in the dynamic range and wavelength resolution.

Therefore, an objective of one aspect of the present disclosure is to provide a spectroscopic measurement system capable of spectrally separating and detecting light in a wide wavelength range with sufficient diffraction efficiency, while also ensuring the dynamic range and wavelength resolution.

### Solution to Problem

A spectroscopic measurement system according to one aspect of the present disclosure is [1] "a spectroscopic measurement system comprising: a light irradiation portion that irradiates an object with light; a spectroscopic portion that spectrally separates light from the object irradiated by the light irradiation portion; a light detection portion that detects the light spectrally separated by the spectroscopic portion, the light detection portion having sensitivity in a first wavelength range and a second wavelength range shorter than the first wavelength range; and a processing portion, the spectroscopic measurement system including a wavelength switching means capable of switching a detection state between a first state in which at least a first light having a wavelength in the first wavelength range is incident on the spectroscopic portion and an Nth-order diffracted light of the first light is detected by the light detection portion, and a second state in which at least a second light having a wavelength in the second wavelength range is incident on the spectroscopic portion and an Mth-order diffracted light of the second light is detected by the light detection portion, where N and M are integers other than 0 where an absolute value of N is smaller than an absolute value of M, and the processing portion generates spectroscopic data based on the Nth-order diffracted light of the first light detected in the first state and the Mth-order diffracted light of the second light detected in the second state."

In the spectroscopic measurement system, the wavelength switching means is capable of switching the detection state between the first state in which at least the first light having a wavelength in the first wavelength range is incident on the spectroscopic portion and the Nth-order diffracted light of the first light is detected by the light detection portion, and the second state in which at least the second light having a wavelength in the second wavelength range is incident on the spectroscopic portion and the Mth-order diffracted light of the second light is detected by the light detection portion. Then, spectroscopic data is generated based on the Nth-order diffracted light of the first light detected in the first state and the Mth-order diffracted light of the second light detected in the second state. Accordingly, spectroscopic data can be generated using the Nth-order diffracted light of the first light and the Mth-order diffracted light of the second light which have a relatively high diffraction efficiency, and as a result, light in a wide wavelength range can be spectrally separated and detected with sufficient diffraction efficiency. In addition, in the spectroscopic measurement system, since the Nth-order diffracted light of the first light is detected by the light detection portion in the first state and the Mth-order diffracted light of the second light is detected by the light detection portion in the second state, it is possible, for example, to detect the Nth-order diffracted light and the Mth-order diffracted light in a common region of the light detection portion. Accordingly, even when the size of the light detection portion is small, for example, it is possible to suppress the width per unit wavelength (pitch) in the light detection portion from becoming narrow, and the dynamic range and wavelength resolution can be ensured. Therefore, according to the spectroscopic measurement system, light in a wide wavelength range can be spectrally separated and detected with sufficient diffraction efficiency, while also ensuring the dynamic range and wavelength resolution.

The spectroscopic measurement system according to one aspect of the present disclosure may be [2] "the spectroscopic measurement system according to [1], wherein the wavelength switching means is constituted by a filter selection portion that places, on an optical path, a filter selected from a plurality of selection filters including a first filter that transmits the first light and blocks light other than the first light and a second filter that transmits the second light and blocks light other than the second light, and the first filter is placed on the optical path in the first state, and the second filter is placed on the optical path in the second state." In this case, the wavelength switching means can be constituted by the filter selection portion that places, on the optical path, a filter selected from the plurality of selection filters.

The spectroscopic measurement system according to one aspect of the present disclosure may be [3] "the spectroscopic measurement system according to [2], wherein the wavelength switching means is capable of switching the detection state to a third state in addition to the first state and the second state, in which a third light including a first portion having a wavelength in the first wavelength range and a second portion having a wavelength in the second wavelength range is incident on the spectroscopic portion, and an Nth-order diffracted light of the first portion of the third light and an Mth-order diffracted light of the second portion of the third light are detected by the light detection portion, and the processing portion generates the spectroscopic data further based on the Nth-order diffracted light of the first portion of the third light detected in the third state and the Mth-order diffracted light of the second portion of the third light." In this case, the spectroscopic data can be generated further based on the detection result of the third light having wavelengths in both the first wavelength range and the second wavelength range.

The spectroscopic measurement system according to one aspect of the present disclosure may be [4] "the spectroscopic measurement system according to [2] or [3], further comprising a switching portion disposed upstream of the filter selection portion on the optical path, wherein the switching portion includes a switching filter that transmits one of the first light and the second light and blocks light other than the one of the first light and the second light, and is capable of switching between a state in which the switching filter is placed upstream of the filter selection portion on the optical path and light other than the one of the first light and the second light is blocked, and a state in which the switching filter is not placed upstream of the filter selection portion on the optical path and both the first light and the second light are incident on the filter selection portion." In this case, for example, even when the characteristics of the plurality of selection filters are not stored in advance, it becomes possible to determine, by executing a predetermined process, whether the light detected by the light detection portion while using a certain selection filter is the Nth-order diffracted light of the first light or the Mth-order diffracted light of the second light. For example, for each selection filter, detection results in both the state in which the switching filter is placed and the state in which it is not placed are acquired. By using these detection results, the above-described determination can be made.

The spectroscopic measurement system according to one aspect of the present disclosure may be [5] "the spectroscopic measurement system according to [1], wherein the light irradiation portion is configured such that a wavelength of light irradiated on the object is variable, the wavelength switching means is constituted by the light irradiation portion, and the detection state is switched between the first state and the second state by changing the wavelength of light irradiated on the object from the light irradiation portion." In this case, the wavelength switching means can be constituted by the light irradiation portion configured such that the wavelength of light irradiated on the object is variable.

The spectroscopic measurement system according to one aspect of the present disclosure may be [6] "the spectroscopic measurement system according to [5], wherein the light irradiation portion includes a first light source that outputs the first light and a second light source that outputs the second light, and the detection state is switched between the first state and the second state by switching an on/off state of at least one of the first light source and the second light source." In this case, the wavelength switching means can be constituted by the first light source and the second light source, of which the on/off state of at least one is switched.

The spectroscopic measurement system according to one aspect of the present disclosure may be [7] "the spectroscopic measurement system according to [6], wherein in the first state, both the first light source and the second light source are on, and in the second state, the second light source is on and the first light source is off, or in the first state, the first light source is on and the second light source is off, and in the second state, both the first light source and the second light source are on." In this case, the first state and the second state can be switched by turning one of the first light source and the second light source on/off while keeping the other on, and the operation of the first light source and the second light source can be simplified.

The spectroscopic measurement system according to one aspect of the present disclosure may be [8] "the spectroscopic measurement system according to [6], wherein in the first state, the first light source is on and the second light source is off, and in the second state, the first light source is off and the second light source is on." In this case, since only one of the first light source and the second light source is on in each of the first state and the second state, the process of generating spectroscopic data can be simplified compared to, for example, a case where the first state and the second state are switched by turning one of the first light source and the second light source on/off while keeping the other on.

The spectroscopic measurement system according to one aspect of the present disclosure may be [9] "the spectroscopic measurement system according to [5], wherein the light irradiation portion includes a light output portion that outputs the first light and the second light separated from each other, and a light restriction portion disposed downstream of the light output portion on an optical path, the light restriction portion is capable of restricting downstream progression of at least one of the first light and the second light output from the light output portion, and is capable of switching a restriction state of the at least one of the first light and the second light, and the detection state is switched between the first state and the second state by switching the restriction state by the light restriction portion." In this case, the wavelength switching means can be constituted by the light output portion that outputs the first light and the second light separated from each other, and the light restriction portion capable of switching the restriction state of at least one of the first light and the second light.

The spectroscopic measurement system according to one aspect of the present disclosure may be [10] "the spectroscopic measurement system according to [9], wherein the light restriction portion restricts the second light and allows the first light to proceed downstream in the first state, and allows the first light and the second light to proceed downstream without restriction in the second state, or the light restriction portion allows the first light and the second light to proceed downstream without restriction in the first state, and restricts the first light and allows the second light to proceed downstream in the second state." In this case, the first state and the second state can be switched by allowing the first light and the second light to proceed without restriction in one of the first state and the second state, and restricting only one of the first light and the second light in the other of the first state and the second state. Therefore, the switching operation of the restriction state by the light restriction portion can be simplified.

The spectroscopic measurement system according to one aspect of the present disclosure may be [11] "the spectroscopic measurement system according to [9], wherein the light restriction portion restricts the second light and allows the first light to proceed downstream in the first state, and restricts the first light and allows the second light to proceed downstream in the second state." In this case, since only one of the first light and the second light proceeds downstream in each of the first state and the second state, the process of generating spectroscopic data can be simplified compared to, for example, a case where both the first light and the second light proceed downstream in either the first state or the second state.

The spectroscopic measurement system according to one aspect of the present disclosure may be [12] "the spectroscopic measurement system according to any one of [1] to [11], further comprising a filter that is disposed between the spectroscopic portion and the light detection portion and that attenuates at least one of diffracted light other than the Nth-order diffracted light of the first light and diffracted light other than the Mth-order diffracted light of the second light." In this case, the Nth-order diffracted light of the first light and the Mth-order diffracted light of the second light can be more reliably detected in the light detection portion.

The spectroscopic measurement system according to one aspect of the present disclosure may be [13] "the spectroscopic measurement system according to any one of [1] to [12], wherein the absolute value of N is 1 and the absolute value of M is 2." In this case, light in a wide wavelength range can be spectrally separated and detected with sufficient diffraction efficiency.

The spectroscopic measurement system according to one aspect of the present disclosure may be [14] "the spectroscopic measurement system according to any one of [1] to [13], wherein the spectroscopic portion includes a spectroscopic element capable of spectrally separating at least light in a wavelength range of 1000 nm to 1500 nm into a first-order diffracted light." In this case, while the diffraction efficiency of the diffraction grating is high on the long wavelength side, the diffraction efficiency of the diffracted light is low on the short wavelength side; however, in the spectrometer, by detecting the Nth-order diffracted light of the first light in the first wavelength range on the long wavelength side and the Mth-order diffracted light of the second light in the second wavelength range on the short wavelength side, light in a wide wavelength range can be spectrally separated and detected with sufficient diffraction efficiency.

The spectroscopic measurement system according to one aspect of the present disclosure may be [15] "the spectroscopic measurement system according to any one of [1] to [14], wherein a detection region of the light detection portion that detects the Nth-order diffracted light of the first light in the first state is common to a detection region of the light detection portion that detects the Mth-order diffracted light of the second light in the second state." In this case, the width per unit wavelength in the light detection portion can be ensured to be wider compared to, for example, a case where the Nth-order diffracted light of the first light and the Mth-order diffracted light of the second light are detected in different regions of the light detection portion.

The spectroscopic measurement system according to one aspect of the present disclosure may be [16] "the spectroscopic measurement system according to any one of [6] to [8], wherein the on/off state is switched by pulse-driving the at least one of the first light source and the second light source, and the detection state is alternately switched between the first state and the second state." In this case, comprehensive measurement over a wide wavelength range becomes possible.

The spectroscopic measurement system according to one aspect of the present disclosure may be [17] "the spectroscopic measurement system according to [5], wherein the light irradiation portion includes a wavelength-tunable light source, and the detection state is switched between the first state and the second state by changing the wavelength of light output from the wavelength-tunable light source." In this case, the wavelength switching means can be constituted using the wavelength-tunable light source.

The spectroscopic measurement system according to one aspect of the present disclosure may be [18] "the spectroscopic measurement system according to any one of [9] to [11], wherein the detection state is alternately switched between the first state and the second state by switching the restriction state by the light restriction portion." In this case, comprehensive measurement over a wide wavelength range becomes possible.

The spectroscopic measurement system according to one aspect of the present disclosure may be [19] "the spectroscopic measurement system according to any one of [1] to [18], wherein the spectroscopic portion includes a spectroscopic element composed of a blazed diffraction grating, and a blaze wavelength of the blazed diffraction grating is 1000 nm or more." In this case, while the diffraction efficiency of the diffraction grating is high on the long wavelength side, the diffraction efficiency of the diffracted light is low on the short wavelength side; however, in the spectrometer, by detecting the Nth-order diffracted light of the first light in the first wavelength range on the long wavelength side and the Mth-order diffracted light of the second light in the second wavelength range on the short wavelength side, light in a wide wavelength range can be spectrally separated and detected with sufficient diffraction efficiency.

A spectroscopic detection method according to one aspect of the present disclosure is [20] "a spectroscopic detection method using the spectroscopic measurement system according to any one of [1] to [19], the method comprising: a first step in which the light detection portion detects the Nth-order diffracted light of the first light in the first state; a second step in which the light detection portion detects the Mth-order diffracted light of the second light in the second state; and a third step in which the processing portion generates the spectroscopic data based on the Nth-order diffracted light of the first light detected in the first step and the Mth-order diffracted light of the second light detected in the second step." According to the spectroscopic detection method, for the reasons described above, light in a wide wavelength range can be spectrally separated and detected with sufficient diffraction efficiency, while also ensuring the dynamic range and wavelength resolution.

A spectroscopic detection method according to one aspect of the present disclosure may be [21] "a spectroscopic detection method using the spectroscopic measurement system according to [4], the method comprising: a first step in which the light detection portion detects the Nth-order diffracted light of the first light in the first state; a second step in which the light detection portion detects the Mth-order diffracted light of the second light in the second state; and a third step in which the processing portion generates the spectroscopic data based on the Nth-order diffracted light of the first light detected in the first step and the Mth-order diffracted light of the second light detected in the second step, the method further comprising, before the first step, the second step, and the third step, an acquisition step of acquiring, for each of the plurality of selection filters of the filter selection portion, with the selection filter placed on the optical path, detection results of the light detection portion in (1) a first reference state in which the switching filter is not placed upstream of the filter selection portion on the optical path and both the first light and the second light are incident on the filter selection portion, and (2) a second reference state in which the switching filter is placed upstream of the filter selection portion on the optical path and light other than the one of the first light and the second light is blocked, wherein in the third step, the processing portion determines, based on the detection result of the light detection portion in the first reference state and the detection result of the light detection portion in the second reference state, whether the light detected by the light detection portion in the first step is the Nth-order diffracted light of the first light or the Mth-order diffracted light of the second light, and also determines whether the light detected by the light detection portion in the second step is the Nth-order diffracted light of the first light or the Mth-order diffracted light of the second light." In this case, for example, even when the characteristics of the plurality of selection filters are not stored in advance, it becomes possible to determine whether the light detected by the light detection portion while using a certain selection filter is the Nth-order diffracted light of the first light or the Mth-order diffracted light of the second light.

A spectroscopic measurement system according to one aspect of the present disclosure is [22] "a spectroscopic measurement system comprising: a light irradiation portion that irradiates an object with light; a spectroscopic portion that spectrally separates light from the object irradiated by the light irradiation portion; a light detection portion that detects the light spectrally separated by the spectroscopic portion, the light detection portion having sensitivity in a first wavelength range and a second wavelength range shorter than the first wavelength range; and a processing portion, wherein a third light including a first portion having a wavelength in the first wavelength range and a second portion having a wavelength in the second wavelength range is incident on the spectroscopic portion, an Nth-order diffracted light of the first portion of the third light and an Mth-order diffracted light of the second portion of the third light are detected by the light detection portion, where N and M are integers other than 0 where an absolute value of N is smaller than an absolute value of M, and the processing portion generates spectroscopic data based on the Nth-order diffracted light of the first portion of the third light and the Mth-order diffracted light of the second portion of the third light detected by the light detection portion."

In the spectroscopic measurement system, the third light including the first portion having a wavelength in the first wavelength range and the second portion having a wavelength in the second wavelength range is incident on the spectroscopic portion, and the Nth-order diffracted light of the first portion of the third light and the Mth-order diffracted light of the second portion of the third light are detected by the light detection portion. Accordingly, spectroscopic data can be generated using the Nth-order diffracted light and the Mth-order diffracted light which have a relatively high diffraction efficiency, and as a result, light in a wide wavelength range can be spectrally separated and detected with sufficient diffraction efficiency.

A spectroscopic measurement system according to one aspect of the present disclosure is [23] "a spectroscopic measurement system comprising: a light irradiation portion that irradiates an object with light; a spectroscopic portion that spectrally separates light from the object irradiated by the light irradiation portion; a light detection portion that detects the light spectrally separated by the spectroscopic portion, the light detection portion having sensitivity in a first wavelength range and a second wavelength range shorter than the first wavelength range; and a processing portion, wherein the light irradiation portion includes at least one (for example, a plurality of) first light source that outputs a first light having a wavelength in the first wavelength range, and at least one (for example, a plurality of) second light source that outputs a second light having a wavelength in the second wavelength range, the first light is incident on the spectroscopic portion and an Nth-order diffracted light of the first light is detected by the light detection portion, and the second light is incident on the spectroscopic portion and an Mth-order diffracted light of the second light is detected by the light detection portion, where N and M are integers other than 0 where an absolute value of N is smaller than an absolute value of M, and the processing portion generates spectroscopic data based on the Nth-order diffracted light of the first light and the Mth-order diffracted light of the second light detected by the light detection portion."

In the spectroscopic measurement system, the first light having a wavelength in the first wavelength range is incident on the spectroscopic portion and the Nth-order diffracted light of the first light is detected by the light detection portion, and the second light having a wavelength in the second wavelength range is incident on the spectroscopic portion and the Mth-order diffracted light of the second light is detected by the light detection portion. Accordingly, spectroscopic data can be generated using the Nth-order diffracted light of the first light and the Mth-order diffracted light of the second light which have a relatively high diffraction efficiency, and as a result, light in a wide wavelength range can be spectrally separated and detected with sufficient diffraction efficiency.

### Advantageous Effects of Invention

According to one aspect of the present disclosure, it is possible to provide a spectroscopic measurement system capable of spectrally separating and detecting light in a wide wavelength range with sufficient diffraction efficiency, while also ensuring the dynamic range and wavelength resolution.

### Brief Description of Drawings

[FIG. 1] FIG. 1 is a configuration diagram of a spectroscopic measurement system according to an embodiment.
[FIG. 2] FIG. 2 is a diagram showing a guide member.
[FIG. 3] FIG. 3 is a diagram for describing diffracted light detected by a light detection portion in a first state.
[FIG. 4] FIG. 4 is spectroscopic data generated by a processing portion based on a detection result in the first state.
[FIG. 5] FIG. 5 is a diagram for describing diffracted light detected by the light detection portion in a second state.
[FIG. 6] FIG. 6 is spectroscopic data generated by the processing portion based on a detection result in the second state.
[FIG. 7] FIG. 7 is a diagram for describing diffracted light detected by the light detection portion in a third state.
[FIG. 8] FIG. 8 is spectroscopic data generated by the processing portion based on a detection result in the third state.
[FIG. 9] FIG. 9 is a diagram for describing diffracted light detected by the light detection portion in a fourth state.
[FIG. 10] FIG. 10 is spectroscopic data generated by the processing portion based on a detection result in the fourth state.
[FIG. 11] FIG. 11 is a flowchart for describing a spectroscopic detection method.
[FIG. 12] FIG. 12 is a diagram for describing a spectroscopic image generated by the processing portion based on detection results in the first state and the second state.
[FIG. 13] (a) and (b) in FIG. 13 are diagrams for describing an improvement in diffraction efficiency by the spectroscopic portion.
[FIG. 14] (a) to (c) in FIG. 14 are diagrams for describing functions and effects of the spectroscopic measurement system according to the embodiment.
[FIG. 15] FIG. 15 is a configuration diagram of a spectroscopic measurement system according to a first modification example.
[FIG. 16] FIG. 16 is a configuration diagram of a spectroscopic measurement system according to a second modification example.
[FIG. 17] FIG. 17 is a flowchart for describing a spectroscopic detection method in the second modification example.
[FIG. 18] (a) to (c) in FIG. 18 are diagrams for describing a method for identifying detection regions for detecting first-order diffracted light and second-order diffracted light in the second modification example.
[FIG. 19] FIG. 19 is a configuration diagram of a spectroscopic measurement system according to a third modification example.
[FIG. 20] FIG. 20 is a diagram for describing diffracted light detected by the light detection portion in the third modification example.
[FIG. 21] FIG. 21 is a flowchart for describing a spectroscopic detection method in the third modification example.
[FIG. 22] FIG. 22 is a diagram for describing a method for generating a spectroscopic image in the third modification example.
[FIG. 23] FIG. 23 is a configuration diagram of a spectroscopic measurement system according to a fourth modification example.
[FIG. 24] FIG. 24 is a configuration diagram of a spectroscopic measurement system according to a fifth modification example.
[FIG. 25] FIG. 25 is a diagram for describing diffracted light detected by the light detection portion in the fifth modification example.
[FIG. 26] FIG. 26 is a configuration diagram of a spectroscopic measurement system according to a sixth modification example.
[FIG. 27] FIG. 27 is a configuration diagram of a spectroscopic measurement system according to a seventh modification example.
[FIG. 28] FIG. 28 is a diagram for describing diffracted light detected by the light detection portion in the seventh modification example.
[FIG. 29] FIG. 29 is a spectroscopic image generated by the processing portion in the seventh modification example.
[FIG. 30] FIG. 30 is a configuration diagram of a spectroscopic measurement system according to an eighth modification example.

### Description of Embodiments

Hereinafter, an embodiment of the present disclosure will be described in detail with reference to the drawings. In the following description, the same reference signs are used for the same or corresponding elements, and duplicate descriptions will be omitted.

### [Spectroscopic Measurement System]

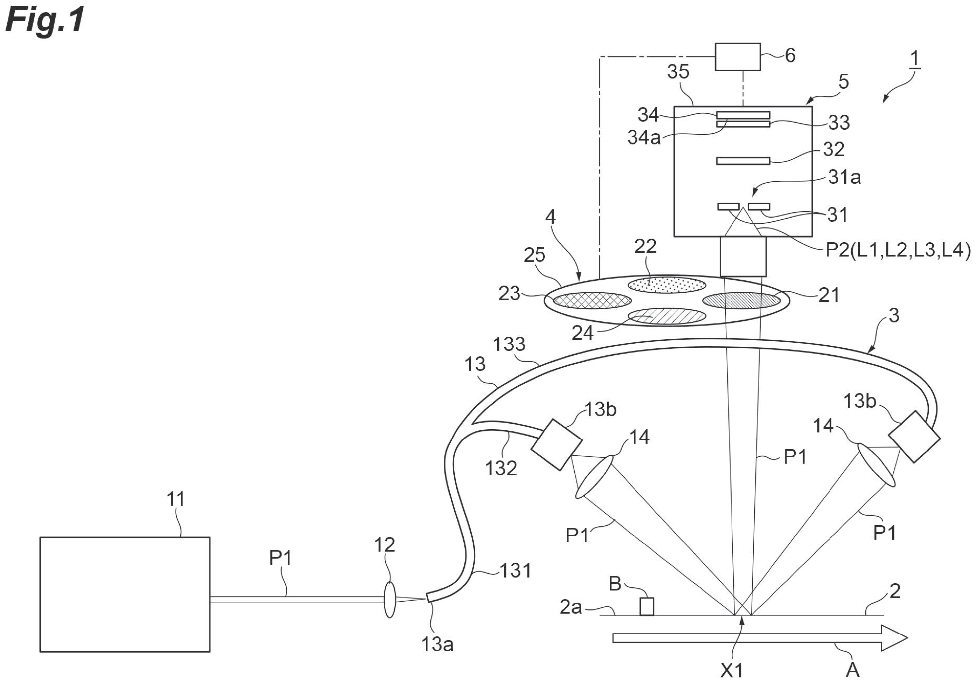

As shown in FIG. 1, a spectroscopic measurement system 1 according to the embodiment includes a conveying portion 2, a light irradiation portion 3, a filter selection portion 4 (wavelength switching means), a spectrometer 5, and a processing portion 6. In the spectroscopic measurement system 1, an object B that is conveyed along a conveying direction A by the conveying portion 2 is irradiated with light from the light irradiation portion 3. The light emitted from the light irradiation portion 3 for irradiation and reflected or scattered by the object B is incident on the filter selection portion 4 and the spectrometer 5 in this order, and is spectrally separated and detected in the spectrometer 5. A spectroscopic image is generated in the processing portion 6 based on the detection result. The spectroscopic image is an image including position information on the object B as well as wavelength information (spectral information) at the position. In this way, in the spectroscopic measurement system 1, the spectrometer 5 is configured as a hyperspectral camera, and hyperspectral observation of the object B is performed. The spectrometer 5 can also be regarded as a camera module or a spectroscopic measurement module.

The conveying portion 2 is a belt conveyor in this example, and conveys the object B placed on a conveying surface 2a (placement surface), which is the surface of the belt, along the conveying direction A. When the object B is observed (when the spectroscopic measurement system 1 is operated), the object B that is conveyed by the conveying portion 2 is irradiated with the light from the light irradiation portion 3. Accordingly, observation can be performed while changing the irradiation position of the light on the object B, and the entirety of the object B can be observed.

The light irradiation portion 3 includes a light source 11 and an optical system (a lens 12, a guide member 13, and a pair of lenses 14). The light source 11 is, for example, a wide wavelength range light source configured as a halogen lamp light source, a supercontinuum light source (SC light source), or the like. The light source 11 outputs, for example, an irradiation light P1 that is light including a wavelength range of 387.5 nm to 1650 nm.

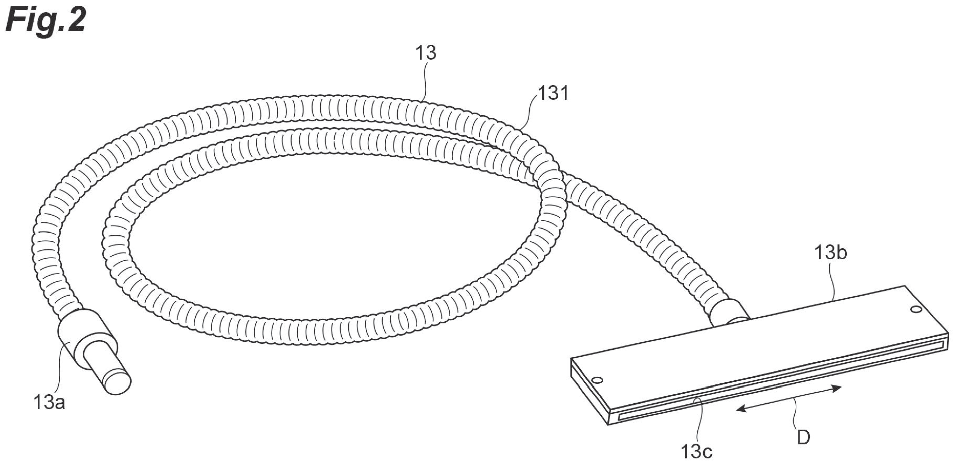

The irradiation light P1 is focused by the lens 12 and is incident on the guide member 13. The guide member 13 includes a first portion 131, a second portion 132, and a third portion 133. Each of the portions 131 to 133 is formed in a tubular shape. One end of the first portion 131 constitutes a light incident portion 13a that is a portion through which the irradiation light P1 is incident on the inside of the guide member 13. One ends of the second portion 132 and the third portion 133 are connected to the other end of the first portion 131. Namely, the guide member 13 has a structure in which the guide member 13 is branched into the second portion 132 and the third portion 133 at the other end of the first portion 131. A light emitting portion 13b (FIG. 2) that is a portion through which the irradiation light P1 is emitted from the guide member 13 is provided at the other end of each of the second portion 132 and the third portion 133. In the guide member 13, the irradiation light P1 incident from the light incident portion 13a is guided to be emitted from each of the light emitting portions 13b. Incidentally, FIG. 2 shows an example of the guide member 13 which does not include the second portion 132 and the third portion 133 and in which the light emitting portion 13b is provided at one end of the first portion 131.

The light emitting portion 13b is formed in a flat rectangular parallelepiped shape, and has a light emitting opening 13c having a rectangular shape. Therefore, when a direction parallel to the long sides of the light emitting opening 13c is defined as a direction D, the irradiation light P1 spread in the direction D is emitted from the light emitting portion 13b. The light emitting portion 13b is disposed such that the direction D is parallel to the conveying surface 2a and is perpendicular to the conveying direction A. Accordingly, the object B is irradiated with the irradiation light P1 spread in a direction perpendicular to the conveying direction A (the direction perpendicular to the drawing sheet of FIG. 1).

When the position where the object B is irradiated with the irradiation light P1 is defined as an irradiation position X1, a pair of the light emitting portions 13b are disposed on one side and the other side in the conveying direction A with respect to the irradiation position X1. The irradiation light P1 emitted from one light emitting portion 13b is focused by one of the pair of lenses 14, and irradiates the object B at the irradiation position X1 from the one side (for example, upstream side) in the conveying direction A. The irradiation light P1 emitted from the other light emitting portion 13b is focused by the other of the pair of lenses 14, and irradiates the object B at the irradiation position X1 from the other side (for example, downstream side) in the conveying direction A. Each of the lenses 14 is configured as, for example, a cylindrical lens in order to focus the irradiation light P1 spread in the direction perpendicular to the conveying direction A. In this way, by irradiating the object B with light from both sides in the conveying direction A, the object B having a three-dimensional shape can also be suitably irradiated with the light.

The irradiation light P1 emitted from the light irradiation portion 3 for irradiation and reflected or scattered by the object B is incident on the filter selection portion 4. The filter selection portion 4 switches the detection state among the first to fourth states as described later. The filter selection portion 4 is disposed between the irradiation position X1 (object B) and the spectrometer 5. The filter selection portion 4 includes, as a plurality of selection filters, a first filter 21, a second filter 22, a third filter 23, and a fourth filter 24. The filters 21 to 24 are disposed, for example, in a plurality of openings formed in a plate-shaped body portion 25, respectively. The filter selection portion 4 is a filter changer that places a filter selected from the filters 21 to 24 on the optical path of the irradiation light P1 by rotating the body portion 25 with a drive portion (not shown). The operation of the filter selection portion 4 (drive portion) is controlled by the processing portion 6. The filters 21 to 24 placed on the optical path transmit light in a predetermined wavelength range included in the irradiation light P1 and block light other than the light in the predetermined wavelength range. In this way, the filter selection portion 4 constitutes the wavelength switching means that selects (restricts) the wavelength of light detected in the spectrometer 5 by selecting the filter to be placed on the optical path of the irradiation light P1. The characteristics of each of the filters 21 to 24 will be described later.

The spectrometer 5 includes a slit portion 31, a spectroscopic portion 32, a diffracted light blocking filter 33 (filter), a light detection portion 34, and a housing 35. The housing 35 is formed, for example, in a box shape, and accommodates the slit portion 31, the spectroscopic portion 32, the diffracted light blocking filter 33, and the light detection portion 34.

Light P2 that has transmitted through any one of the filters 21 to 24 is incident on the slit portion 31. The slit portion 31 is, for example, a rectangular flat plate-shaped member in which a slit 31a is formed. The slit portion 31 is disposed such that the extending direction of the slit 31a is parallel to the conveying surface 2a and is perpendicular to the conveying direction A. The slit 31a allows at least a portion of the light P2 to pass therethrough and emits the at least a portion of the light P2 toward the spectroscopic portion 32. In the light P2 from the slit 31a, the position in the extending direction of the slit 31a represents position information on the object B along the direction perpendicular to the conveying direction A.

The spectroscopic portion 32 spectrally separates the light P2 from the slit 31a. The spectroscopic portion 32 is, for example, a reflective spectroscopic element composed of a blazed diffraction grating. The spectroscopic portion 32 is configured to be able to spectrally separate at least light in a wavelength range of 1000 nm to 1500 nm into a first-order diffracted light. "Being capable of spectrally separating light in a certain wavelength range into a first-order diffracted light" means, for example, that the diffraction efficiency of the first-order diffracted light in the wavelength range is 30% or more. In this example, the spectroscopic portion 32 is capable of spectrally separating the light P2 in a wavelength range of 800 nm to 1800 nm into a first-order diffracted light. The blaze wavelength of the blazed diffraction grating constituting the spectroscopic portion 32 is, for example, 1000 nm or more, and in this example, is 1200 nm. The light spectrally separated by the spectroscopic portion 32 includes, as diffracted light of the light P2, zeroth-order diffracted light, first-order diffracted light, second-order diffracted light, third-order diffracted light, and so on. Hereinafter, the zeroth-order diffracted light, first-order diffracted light, second-order diffracted light, third-order diffracted light, and so on are also referred to as zeroth-order light, first-order light, second-order light, third-order light, and so on, respectively. The light from the spectroscopic portion 32 is incident on the diffracted light blocking filter 33. Incidentally, the spectroscopic portion 32 may be a transmissive spectroscopic element composed of a prism or the like, or a spectroscopic element composed of a holographic diffraction grating, depending on the design.

The diffracted light blocking filter 33 is disposed between the spectroscopic portion 32 and the light detection portion 34, and in this example, is fixed on a light detection region 34a of the light detection portion 34. The diffracted light blocking filter 33 functions as an order sorting filter that transmits predetermined diffracted light included in the light incident on the diffracted light blocking filter 33 and blocks diffracted light other than the predetermined diffracted light. Details of the diffracted light blocked by the diffracted light blocking filter 33 will be described later. The light that has transmitted through the diffracted light blocking filter 33 is incident on the light detection portion 34.

The light spectrally separated by the spectroscopic portion 32 is incident on the light detection region 34a of the light detection portion 34, and the light is detected by the light detection portion 34. In this example, the sensitivity wavelength range of the light detection portion 34 is, for example, 380 nm to 1700 nm, and is configured to include a first wavelength range of 775 nm to 1650 nm and a second wavelength range of 387.5 nm to 825 nm that is shorter than the first wavelength range. In this example, the light detection portion 34 is an InGaAs image sensor. Incidentally, the light detection portion 34 may be a CCD (Charge-Coupled Device) image sensor or a CMOS (Complementary Metal-Oxide Semiconductor) image sensor.

The light detection portion 34 includes a plurality of pixels arranged along a direction corresponding to the spectroscopic direction of the spectroscopic portion 32 and a direction perpendicular to the direction. The light detection portion 34 is disposed, for example, such that the direction is parallel to the spectroscopic direction of the spectroscopic portion 32. Namely, in the light detection portion 34, the plurality of pixels are disposed side by side in a two-dimensional manner in a matrix pattern. In the light detection portion 34, the position in the direction represents wavelength information, and the position in the direction perpendicular to the direction represents position information on the object B along the direction perpendicular to the conveying direction A.

The processing portion 6 is communicably connected to the light detection portion 34, and generates a spectroscopic image (spectroscopic data) based on the detection result of the light detection portion 34. The processing portion 6 is composed of, for example, a computer including a processor (CPU) and a RAM and a ROM that are recording media. As described above, the processing portion 6 also controls the filter selection portion 4. The processing portion 6 controls the filter selection portion 4 to switch the filter placed on the optical path of the irradiation light P1 among the filters 21 to 24, thereby switching the detection state in the spectroscopic measurement system 1 among the first to fourth states described below.

### [First to Fourth States]

The diffracted light detected by the light detection portion 34 and the spectroscopic data generated by the processing portion 6 in each of the first to fourth detection states will be described. In this example, the state in which the first filter 21 is placed on the optical path of the irradiation light P1 is defined as the first state, the state in which the second filter 22 is placed on the optical path is defined as the second state, the state in which the third filter 23 is placed on the optical path is defined as the third state, and the state in which the fourth filter 24 is placed on the optical path is defined as the fourth state.

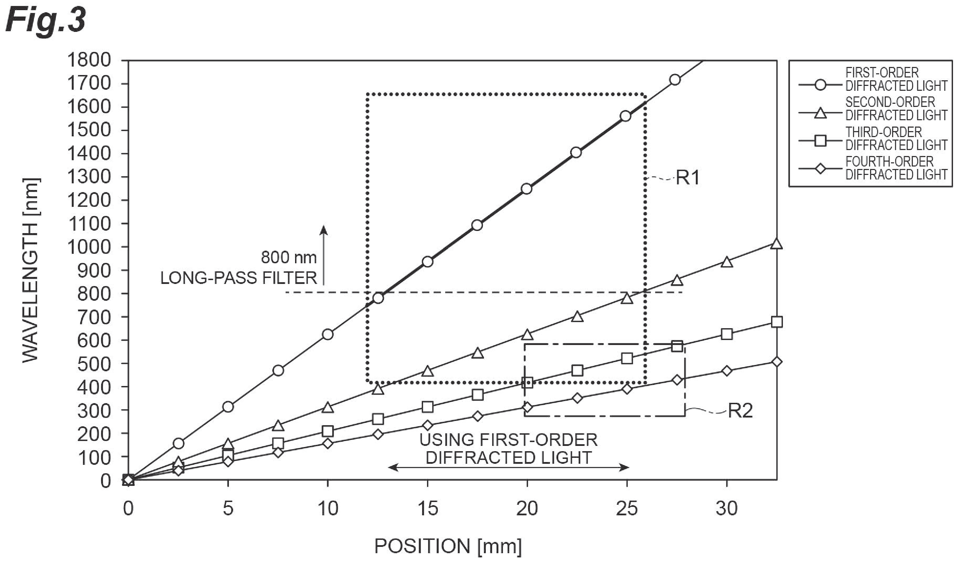

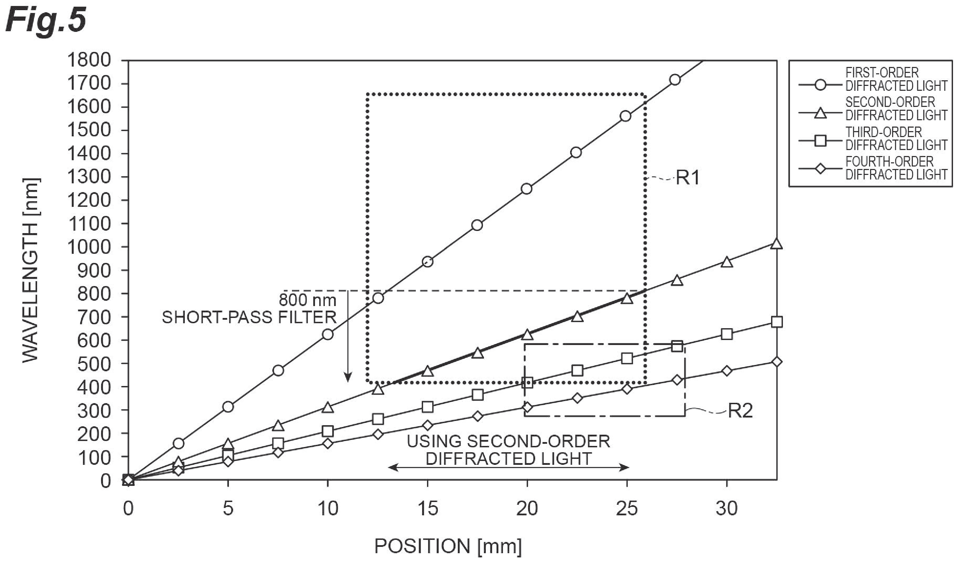

With reference to FIG. 3, the diffracted light detected by the light detection portion 34 in the first state will be described together with the characteristics of the first filter 21. The horizontal axis of the graph in FIG. 3 represents the position on the light detection portion 34 (light detection region 34a) (the position in the direction corresponding to the spectroscopic direction of the spectroscopic portion 32), and the vertical axis represents the wavelength. This point also applies to FIGS. 5, 7, and 9 described later. FIG. 3 shows the first- to fourth-order light spectrally separated by the spectroscopic portion 32. As shown in FIG. 3, when the position in the spectroscopic direction is the same, the wavelength of the Lth-order light (L is an integer of 1 or more) is 1/L of the wavelength of the first-order light.

The first filter 21 is a long-pass filter that transmits light of 800 nm or more (transmission band) and blocks light of 800 nm or less. In FIG. 3, the transmission band of the first filter 21 is indicated as "800 nm long-pass filter." In this example, the first light L1 (FIG. 1) in a wavelength range of 800 nm to 1650 nm or more, which is part of the irradiation light P1 including a wavelength range of 387.5 nm to 1650 nm, transmits through the first filter 21. The wavelength range of the first light L1 overlaps at least a portion (in this example, 800 nm to 1650 nm) of the first wavelength range (775 nm to 1650 nm) of the light detection portion 34. That is, the first light L1 is light having a wavelength in the first wavelength range, and in this example, includes only light in the first wavelength range. In the first state, the first light L1 is spectrally separated by the spectroscopic portion 32, and the diffracted light of the first light L1 is detected by the light detection portion 34.

In FIG. 3, a detection region R1 indicating the position and wavelength range detected by the light detection portion 34 is indicated by a rectangular dotted line. The detection region R1 corresponds to the light detection region 34a of the light detection portion 34. In addition, a blocking region R2 indicating the position and wavelength range where the diffracted light blocking filter 33 blocks light is indicated by a rectangular one-dot chain line. In this example, the light detection portion 34 detects light in a wavelength range of 387.5 nm to 1650 nm incident at positions of 12 mm to 26 mm. The diffracted light blocking filter 33 is disposed at positions of 20 mm to 28 mm. In this example, the diffracted light blocking filter 33 has a characteristic of blocking light with a wavelength of less than 600 nm, and in the first state (the state in which light of 800 nm or more is incident on the light detection portion 34), the diffracted light of the first light L1 is not blocked by the diffracted light blocking filter 33. In this way, in the first state, while the first-order light of the first light L1 that has transmitted through the first filter 21 is incident on the detection region R1, the other diffracted light of the first light L1 is not incident on the detection region R1. Therefore, only the first-order light of the first light L1 is detected by the light detection portion 34.

As described above, in the first state, with the first filter 21 placed on the optical path of the irradiation light P1 by the filter selection portion 4, the object B is irradiated with the irradiation light P1 from the light irradiation portion 3. Then, the irradiation light P1 reflected or scattered by the object B is incident on the first filter 21, and the first light L1 that has transmitted through the first filter 21 is spectrally separated by the spectroscopic portion 32. Then, only the first-order light of the first light L1 is incident on the light detection region 34a of the light detection portion 34, and only the first-order light is detected by the light detection portion 34.

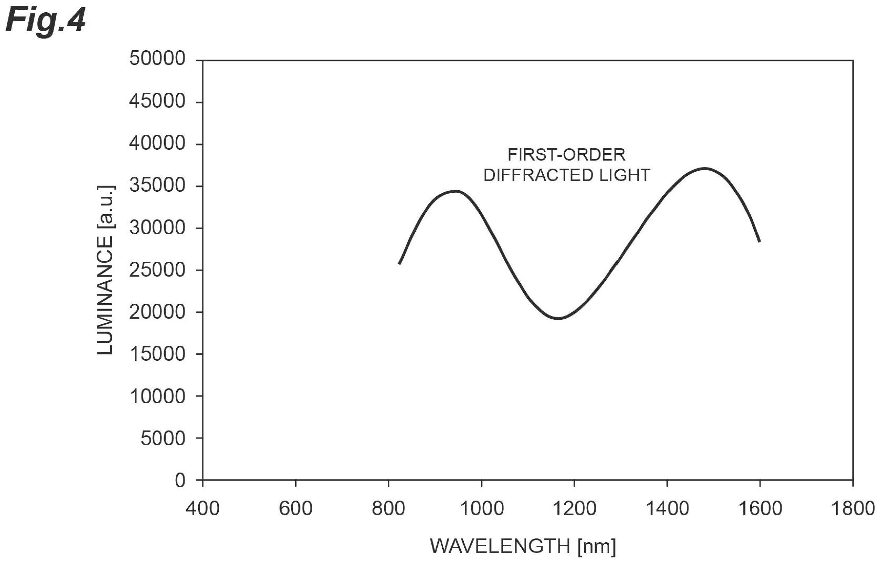

As shown in FIG. 4, the processing portion 6 generates spectroscopic data based on the first-order light of the first light L1 detected in the first state. In this example, the processing portion 6 stores in advance the type of diffracted light (filter data) detected by the light detection portion 34 in each of the first to fourth detection states. Then, the processing portion 6 generates spectroscopic data by converting the luminance at each position on the light detection portion 34 detected in the first state into the luminance of the diffracted light corresponding to each position, based on the filter data. In the example of FIG. 4, spectroscopic data is generated by using the luminance at positions of 13 mm to 26 mm detected by the light detection portion 34 as the luminance of light in a wavelength range of 800 nm to 1600 nm.

With reference to FIG. 5, the diffracted light detected by the light detection portion 34 in the second state will be described together with the characteristics of the second filter 22. The second filter 22 is a short-pass filter that transmits light of 800 nm or less (transmission band) and blocks light of 800 nm or more. In this way, in the second state, the wavelength range of light transmitted through the filter selection portion 4 is different from that in the first state. In FIG. 5, the transmission band of the second filter 22 is indicated as "800 nm short-pass filter." In this example, the second light L2 (FIG. 1) in a wavelength range of 387.5 nm to 800 nm or less, which is part of the irradiation light P1 including a wavelength range of 387.5 nm to 1650 nm, transmits through the second filter 22. The wavelength range of the second light L2 overlaps at least a portion (in this example, 387.5 nm to 800 nm) of the second wavelength range (387.5 nm to 825 nm) of the light detection portion 34. That is, the second light L2 is light having a wavelength in the second wavelength range, and in this example, is light including only light in the second wavelength range. In the second state, the second light L2 is spectrally separated by the spectroscopic portion 32, and the diffracted light of the second light L2 is detected by the light detection portion 34.

In the example of FIG. 5, the second-order light of the second light L2 is incident at positions of 13 mm to 26 mm in the detection region R1. The diffracted light blocking filter 33 blocks diffracted light other than the second-order light of the second light L2 (in this example, the third-order light). That is, the third-order light of the second light L2 is blocked by the diffracted light blocking filter 33 and therefore is not incident on the detection region R1.

As described above, in the second state, with the second filter 22 placed on the optical path of the irradiation light P1 by the filter selection portion 4, the object B is irradiated with the irradiation light P1 from the light irradiation portion 3. Then, the irradiation light P1 reflected or scattered by the object B is incident on the second filter 22, and the second light L2 that has transmitted through the second filter 22 is spectrally separated by the spectroscopic portion 32. Then, the second-order light of the second light L2 is incident on the light detection region 34a of the light detection portion 34, and the second-order light is detected by the light detection portion 34. At this time, the third-order light of the second light L2 is blocked by the diffracted light blocking filter 33 and therefore is not incident on the detection region R1.

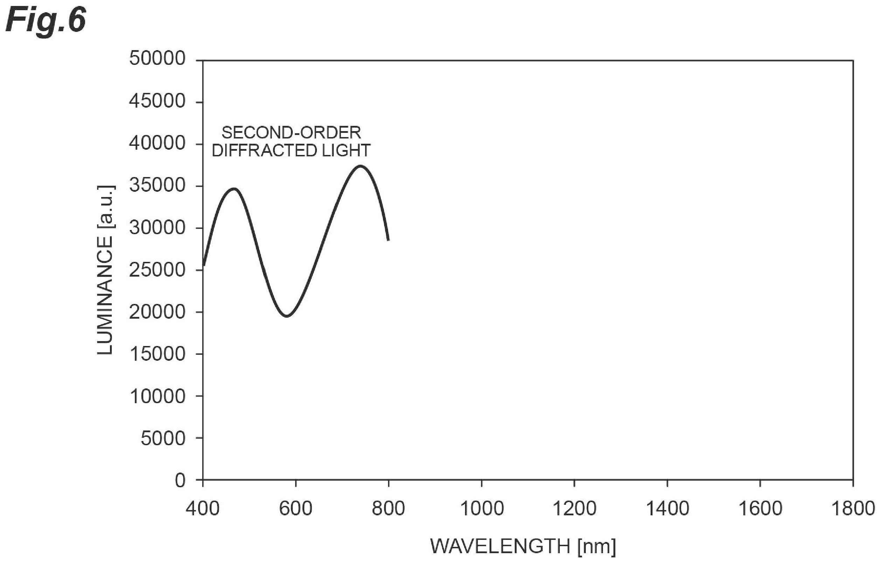

As shown in FIG. 6, the processing portion 6 generates spectroscopic data based on the second-order light of the second light L2 detected in the second state. Similarly to the case of the first state, the processing portion 6 generates spectroscopic data by converting the luminance at each position on the light detection portion 34 detected in the second state into the luminance of the diffracted light corresponding to each position, based on the filter data. In the example of FIG. 6, spectroscopic data is generated by using the luminance at positions of 13 mm to 26 mm detected by the light detection portion 34 as the luminance of light in a wavelength range of 400 nm to 800 nm. In this way, in the first state and the second state, the luminance detected at the same positions of 13 mm to 26 mm on the light detection portion 34 is acquired as the luminance of light in different wavelength ranges. This is because, when the position in the spectroscopic direction is the same, the wavelength of the second-order light is 1/2 of the wavelength of the first-order light.

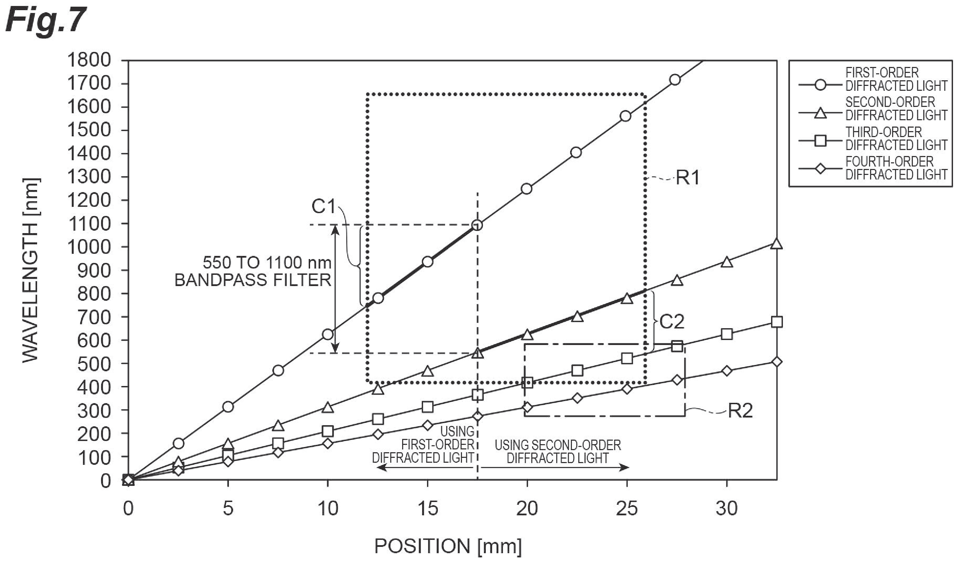

With reference to FIG. 7, the diffracted light detected by the light detection portion 34 in the third state will be described together with the characteristics of the third filter 23. The third filter 23 is a bandpass filter that transmits light in a range of 550 nm to 1100 nm (transmission band) and blocks light with a wavelength smaller than 550 nm and light with a wavelength larger than 1100 nm. In FIG. 7, the transmission band of the third filter 23 is indicated as "550 to 1100 nm bandpass filter." In this example, the third light L3 (FIG. 1) in a wavelength range of 550 nm to 1100 nm, which is part of the irradiation light P1 including a wavelength range of 387.5 nm to 1650 nm, transmits through the third filter 23. The wavelength range of the third light L3 includes a first portion C1 (in this example, 775 nm to 1100 nm) having a wavelength in the first wavelength range (775 nm to 1650 nm) and a second portion C2 (in this example, 550 nm to approximately 825 nm) having a wavelength in the second wavelength range (387.5 nm to 825 nm). The first portion C1 overlaps at least a portion (in this example, a portion on the short wavelength side) of the first wavelength range, and the second portion C2 overlaps at least a portion (in this example, a portion on the long wavelength side) of the second wavelength range. In the third state, the light of the first portion C1 and the light of the second portion C2 are spectrally separated by the spectroscopic portion 32, and the diffracted light of the light of the first portion C1 and the diffracted light of the light of the second portion C2 are detected by the light detection portion 34.

In FIG. 7, the light detection portion 34 detects the first-order light of the first portion C1 of the third light L3 incident at positions of 12 mm to 17.5 mm, and detects the second-order light of the second portion C2 of the third light L3 incident at positions of 17.5 mm to 26 mm. The diffracted light blocking filter 33 blocks diffracted light other than the second-order light of the third light L3 (in this example, the third-order light). That is, the third-order light of the third light L3 is blocked by the diffracted light blocking filter 33 and therefore is not incident on the detection region R1. In this example, the first-order light and the second-order light are detected in two respective regions of the light detection region 34a with the position of 17.5 mm as the boundary. That is, in the third state, the first-order light and the second-order light are detected by the light detection portion 34 without overlapping in the spectroscopic direction.

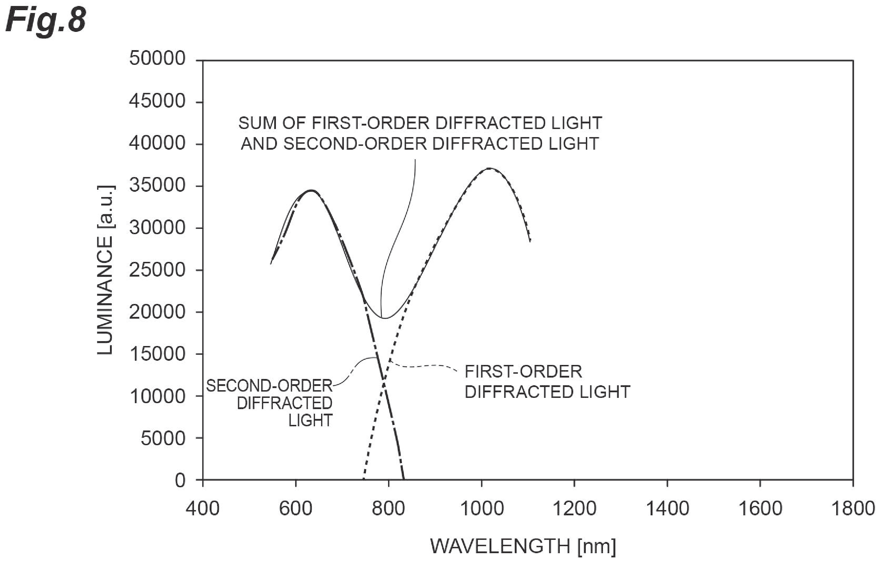

As shown in FIG. 8, the processing portion 6 generates spectroscopic data for the first-order light and the second-order light based on the first-order light and the second-order light of the third light L3 detected in the third state. Similarly to the case of the first state, the processing portion 6 generates spectroscopic data by converting the luminance at each position on the light detection portion 34 detected in the third state into the luminance of the diffracted light corresponding to each position, based on the filter data. In the example of FIG. 8, spectroscopic data showing the luminance of the first-order light and the second-order light of the third light L3 is generated by using the luminance at positions of 12 mm to 17.5 mm detected by the light detection portion 34 as the luminance of light in a wavelength range of 775 nm to 1100 nm, and using the luminance at positions of 17.5 mm to 26 mm as the luminance of light in a wavelength range of 550 nm to 825 nm. In the example of FIG. 8, the luminance in the wavelength range (775 nm to 825 nm) where the first-order light and the second-order light overlap is the sum of the luminances of the first-order light and the second-order light.

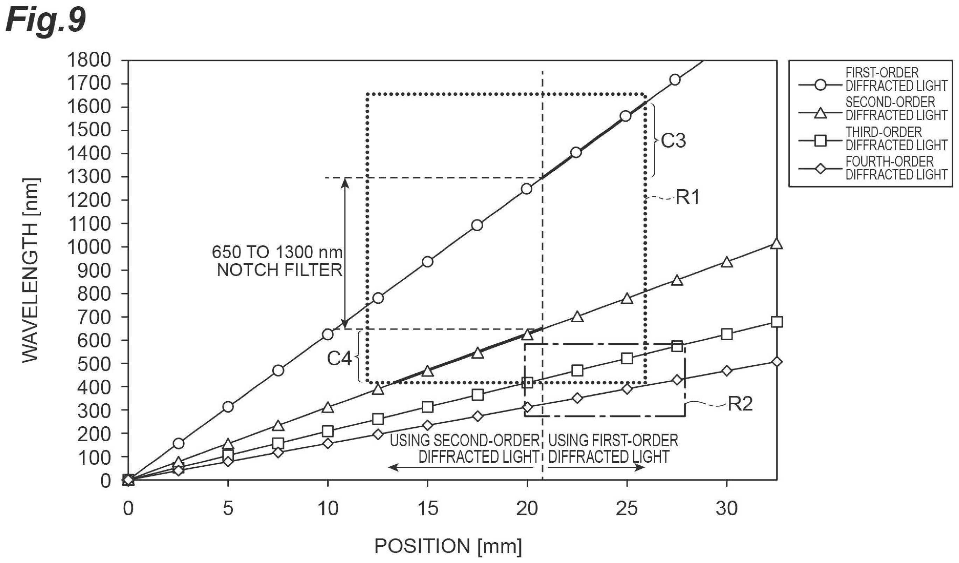

With reference to FIG. 9, the diffracted light detected by the light detection portion 34 in the fourth state will be described together with the characteristics of the fourth filter 24. The fourth filter 24 is a notch filter that transmits light of 650 nm or less (transmission band) and light of 1300 nm or more (transmission band), and blocks light with a wavelength greater than 650 nm and less than 1300 nm. In FIG. 9, the wavelength range blocked by the fourth filter 24 is indicated as "650 to 1300 nm notch filter." In this example, the fourth light L4 (FIG. 1) that includes light in a wavelength range of 1300 nm to 1650 nm and light in a wavelength range of 387.5 nm to 650 nm, which is part of the irradiation light P1 including a wavelength range of 387.5 nm to 1650 nm, transmits through the fourth filter 24. The wavelength range of the fourth light L4 includes a third portion C3 (in this example, 1300 nm to 1650 nm) having a wavelength in the first wavelength range (775 nm to 1650 nm) and a fourth portion C4 (in this example, 387.5 nm to 650 nm) having a wavelength in the second wavelength range (387.5 nm to 825 nm). The third portion C3 overlaps at least a portion (in this example, a portion on the long wavelength side) of the first wavelength range, and the fourth portion C4 overlaps at least a portion (in this example, a portion on the short wavelength side) of the second wavelength range. In the fourth state, the light of the third portion C3 and the light of the fourth portion C4 are spectrally separated by the spectroscopic portion 32, and the diffracted light of the light of the third portion C3 and the diffracted light of the light of the fourth portion C4 are detected by the light detection portion 34.

In FIG. 9, the light detection portion 34 detects the first-order light of the third portion C3 of the fourth light L4 incident at positions of 21 mm to 26 mm, and detects the second-order light of the fourth portion C4 of the fourth light L4 incident at positions of approximately 13 mm to 21 mm. The diffracted light blocking filter 33 blocks diffracted light other than the second-order light of the fourth light L4 (in this example, the third-order light). That is, the third-order light of the fourth light L4 is blocked by the diffracted light blocking filter 33 and therefore is not incident on the detection region R1. In this example, the first-order light and the second-order light are detected in two respective regions of the light detection region 34a with the position of 21 mm as the boundary. That is, in the fourth state, similarly to the third state, the first-order light and the second-order light are detected by the light detection portion 34 without overlapping in the light detection region 34a.

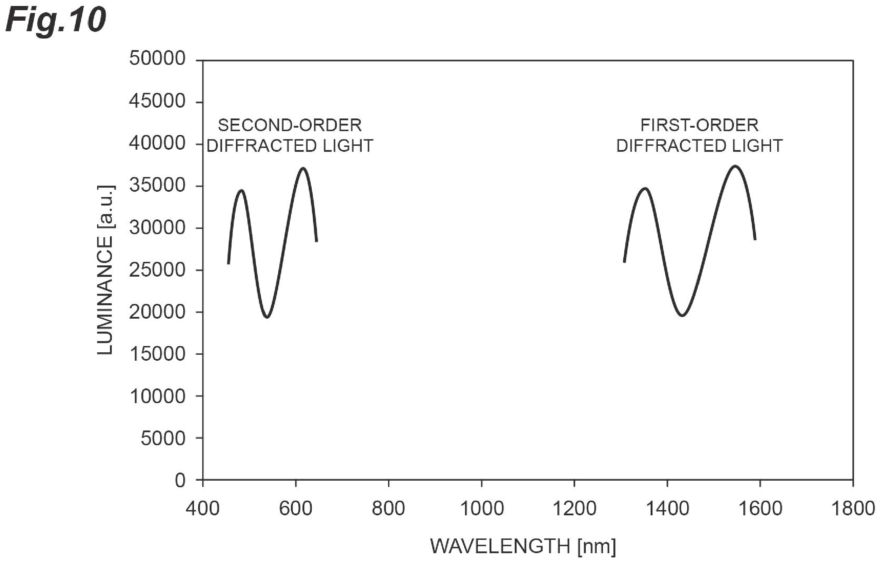

As shown in FIG. 10, the processing portion 6 generates spectroscopic data for the first-order light and the second-order light based on the first-order light and the second-order light of the fourth light L4 detected in the fourth state. Similarly to the case of the first state, the processing portion 6 generates spectroscopic data by converting the luminance at each position on the light detection portion 34 detected in the fourth state into the luminance of the diffracted light corresponding to each position, based on the filter data. In the example of FIG. 10, spectroscopic data showing the luminance of the first-order light and the second-order light of the fourth light L4 is generated by using the luminance at positions of 21 mm to 26 mm detected by the light detection portion 34 as the luminance of light in a wavelength range of 1300 nm to 1650 nm, and using the luminance at positions of approximately 13 mm to 21 mm as the luminance of light in a wavelength range of 387.5 nm to 650 nm.

### [Spectroscopic Detection Method]

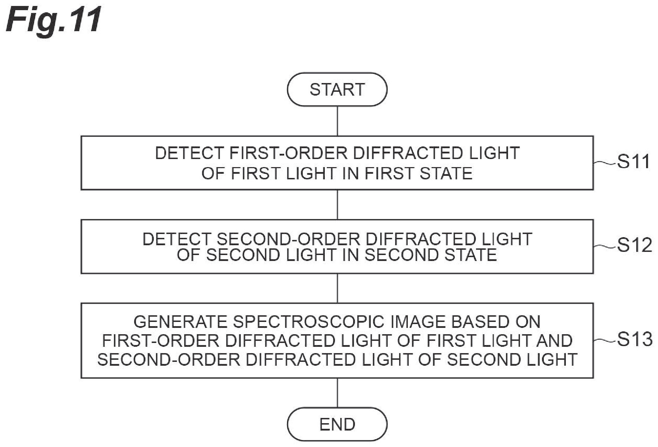

A spectroscopic detection method using the spectroscopic measurement system 1 will be described with reference to FIG. 11. First, the first-order light of the first light L1 is detected by the light detection portion 34 in the first state (step S11 (first step)). In step S11, first, the filter selection portion 4 places the first filter 21 on the optical path to switch the detection state to the first state. In this first state, the light irradiation portion 3 irradiates the object B with the irradiation light P1. The irradiation light P1 reflected or scattered by the object B is incident on the first filter 21, and the first light L1 that has transmitted through the first filter 21 is spectrally separated by the spectroscopic portion 32. The first-order light of the first light L1 from the spectroscopic portion 32 is incident on the light detection region 34a of the light detection portion 34, and the first-order light of the first light L1 is detected by the light detection portion 34.

Subsequently, the second-order light of the second light L2 is detected by the light detection portion 34 in the second state (step S12 (second step)). In step S12, first, the filter selection portion 4 places the second filter 22 on the optical path to switch the detection state to the second state. In this second state, the light irradiation portion 3 irradiates the object B with the irradiation light P1. The irradiation light P1 reflected or scattered by the object B is incident on the second filter 22, and the second light L2 that has transmitted through the second filter 22 is spectrally separated by the spectroscopic portion 32. The second-order light of the second light L2 from the spectroscopic portion 32 is incident on the light detection region 34a of the light detection portion 34, and the second-order light of the second light L2 is detected by the light detection portion 34.

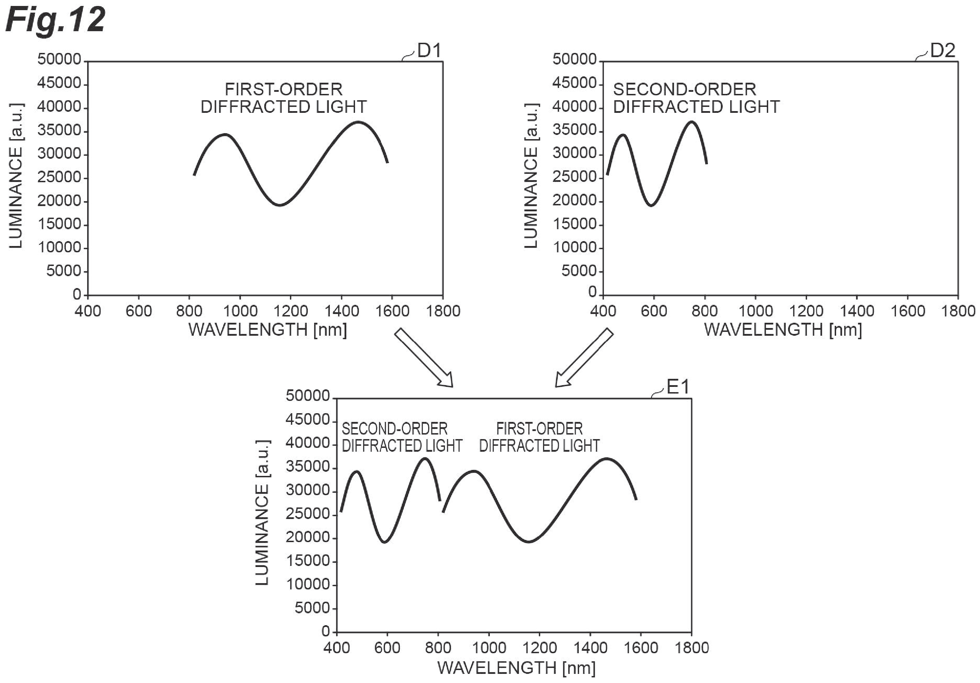

Subsequently, the processing portion 6 generates a spectroscopic image based on the first-order light of the first light L1 detected in step S11 and the second-order light of the second light L2 detected in step S12 (step S13 (third step)). For example, as shown in FIG. 12, the processing portion 6 generates spectroscopic data for the first-order light and the second-order light from the detection result of the first-order light of the first light L1 in the first state (spectroscopic data D1) and the detection result of the second-order light of the second light L2 in the second state (spectroscopic data D2), and generates a spectroscopic image E1 based on the spectroscopic data (by joining the spectroscopic data D1 and D2 together). Incidentally, as described later, the spectroscopic measurement system 1 may detect the first-order light and the second-order light in the third state (fourth state), and may generate a spectroscopic image further based on the detection results of the first-order light and the second-order light in the third state (fourth state).

### [Functions and Effects]

As described above, in the spectroscopic measurement system 1, the filter selection portion 4 is capable of switching the detection state between the first state in which the first light L1 having a wavelength in the first wavelength range is incident on the spectroscopic portion 32 and the first-order light of the first light L1 is detected by the light detection portion 34, and the second state in which the second light L2 having a wavelength in the second wavelength range is incident on the spectroscopic portion 32 and the second-order light of the second light L2 is detected by the light detection portion 34. Then, a spectroscopic image is generated based on the first-order light of the first light L1 detected in the first state and the second-order light of the second light L2 detected in the second state. Accordingly, a spectroscopic image can be generated using the first-order light of the first light L1 and the second-order light of the second light L2 which have a relatively high diffraction efficiency, and as a result, light in a wide wavelength range can be spectrally separated and detected with sufficient diffraction efficiency.

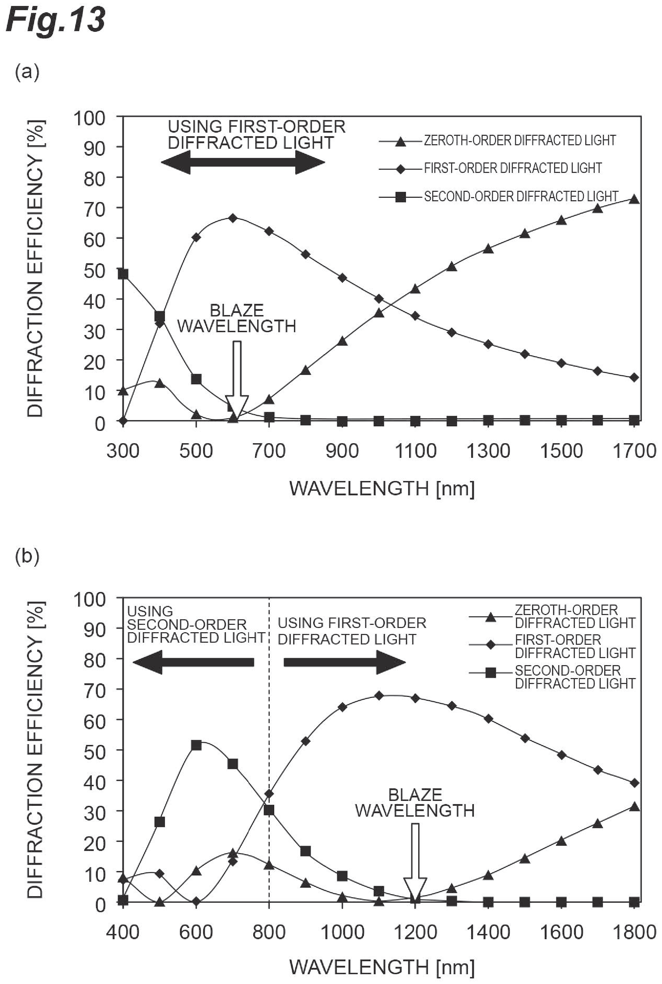

This point will be further described with reference to FIG. 13. (a) in FIG. 13 is an example of a simulation result of diffraction efficiency in a diffraction grating having a blaze wavelength of 600 nm, and (b) in FIG. 13 is an example of a simulation result of diffraction efficiency in a diffraction grating having a blaze wavelength of 1200 nm. For example, when light is spectrally separated by the diffraction grating shown in (a) of FIG. 13 and the first-order light thereof is detected, the diffraction efficiency is low in the region on the long wavelength side. In contrast, for example, by spectrally separating light using the diffraction grating shown in (b) of FIG. 13, using the first-order light for the first wavelength range on the long wavelength side (for example, 800 nm or more), and using the second-order light for the second wavelength range on the short wavelength side (for example, 800 nm or less), the first-order light of the first light L1 and the second-order light of the second light L2 which have a relatively high diffraction efficiency can be detected in the light detection portion 34, and light in a wide wavelength range can be spectrally separated and detected with sufficient diffraction efficiency.

In addition, in the spectroscopic measurement system 1, since the first-order light of the first light L1 is detected by the light detection portion 34 in the first state and the second-order light of the second light L2 is detected by the light detection portion 34 in the second state, it is possible, for example, to detect the first-order light and the second-order light in a common region of the light detection portion 34 (in this example, the light detection region 34a). Accordingly, even when the size of the light detection portion 34 is small, for example, it is possible to suppress the width per unit wavelength (pitch) in the light detection portion 34 from becoming narrow, and the dynamic range and wavelength resolution can be ensured.

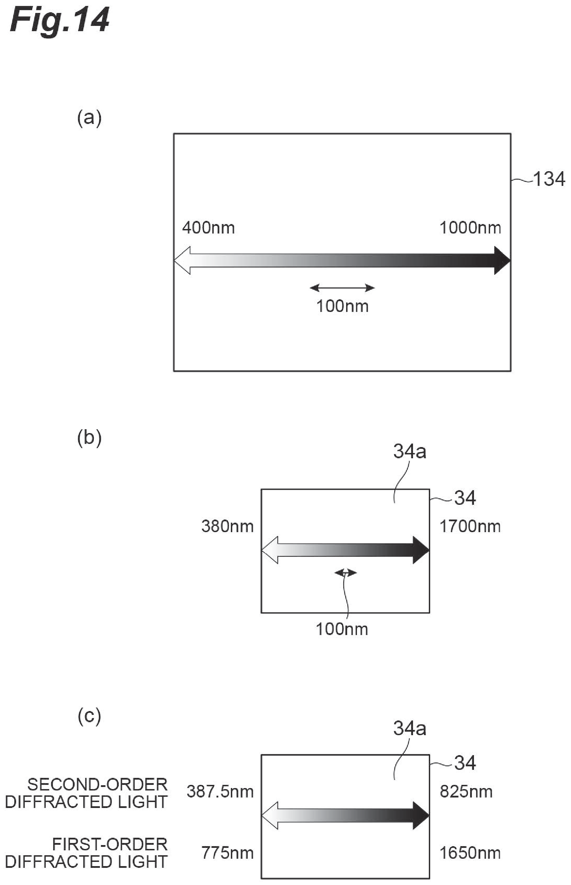

This point will be further described with reference to (a) to (c) of FIG. 14. (a) of FIG. 14 shows a light detection portion 134 having a sensitivity wavelength range of 400 nm to 1000 nm, and (b) and (c) of FIG. 14 show the light detection portion 34 of the above-described embodiment. Incidentally, in the examples of (b) and (c) of FIG. 14, the sensitivity wavelength range of the light detection portion 34 is the same as the sensitivity wavelength range (380 nm to 1700 nm) of the light detection portion 34 of the above-described embodiment. Compared to the light detection portion 134, the sensitivity wavelength range of the light detection portion 34 is relatively wide, but the size of the light detection portion 34 is relatively small. This is because it is difficult to manufacture a sensor having a wide sensitivity wavelength range. Due to the fact that the sensor size is small while the sensitivity wavelength range is wide in this way, as shown in (b) of FIG. 14, when light of 380 nm to 1700 nm is incident on the light detection region 34a, the width per unit wavelength (pitch) becomes narrow, and as a result, the dynamic range becomes narrow. In contrast, as shown in (c) of FIG. 14, by causing the first-order light of 775 nm to 1650 nm to be incident on the light detection region 34a in the first state and causing the second-order light of 387.5 nm to 825 nm to be incident on the light detection region 34a in the second state, the width per unit wavelength can be widened in each detection state. As a result, the dynamic range can be ensured.

As described above, according to the spectroscopic measurement system 1, light in a wide wavelength range can be spectrally separated and detected with sufficient diffraction efficiency, while also ensuring the dynamic range and wavelength resolution.

In addition, in the spectroscopic measurement system 1, the degree of freedom in detection can be increased, enabling appropriate responses to multiple applications. Namely, first, the spectroscopic measurement system 1 may be used for detection of foreign matter. In this case, the ability to detect light in a wide wavelength range is required, and the detection efficiency may be low. On the other hand, when performing preliminary measurement for setting conditions for foreign matter detection, improvement in detection efficiency and detection speed is required, and the detectable wavelength range may be narrow. In the spectroscopic measurement system 1, for the former application, it is possible to detect light in a wide wavelength range by, for example, performing detection while switching between the first state and the second state. In addition, in the spectroscopic measurement system 1, for the latter application, it is possible to improve detection efficiency and detection speed by, for example, using only the detection result in the first state and not performing light detection in other detection states. Therefore, according to the spectroscopic measurement system 1, the degree of freedom in detection can be increased, enabling appropriate responses to multiple applications.

In the spectroscopic measurement system 1, the wavelength switching means is constituted by the filter selection portion 4 that places, on the optical path, a filter selected from a plurality of selection filters including the first filter 21 that transmits the first light L1 and blocks light other than the first light L1 and the second filter 22 that transmits the second light L2 and blocks light other than the second light L2, and the first filter 21 is placed on the optical path in the first state, and the second filter 22 is placed on the optical path in the second state. Accordingly, the wavelength switching means can be constituted by the filter selection portion 4 that places, on the optical path, a filter selected from the plurality of selection filters.

The spectroscopic measurement system 1 includes the diffracted light blocking filter 33 that is disposed between the spectroscopic portion 32 and the light detection portion 34 and that blocks diffracted light other than the second-order light of the second light L2 (in this example, the third-order light). Accordingly, the second-order light of the second light can be more reliably detected in the light detection portion 34.

In the spectroscopic measurement system 1, the spectroscopic portion 32 includes a spectroscopic element capable of spectrally separating at least light in a wavelength range of 1000 nm to 1500 nm into a first-order light. When the spectroscopic portion 32 is configured in this way, as shown in (b) of FIG. 13, for example, the diffraction efficiency of the first-order light of the spectroscopic portion 32 on the long wavelength side is high, while the diffraction efficiency of the first-order light on the short wavelength side is low. In addition, on the short wavelength side, the diffraction efficiency of the second-order light is higher than the diffraction efficiency of the first-order light. Therefore, in the spectroscopic measurement system 1, using such a spectroscopic element, the first-order light of the first light L1 is detected for the first wavelength range on the long wavelength side, and the second-order light of the second light L2 is detected for the second wavelength range on the short wavelength side. Accordingly, light in a wide wavelength range can be spectrally separated and detected with sufficient diffraction efficiency.

In the spectroscopic measurement system 1, the spectroscopic portion 32 includes a spectroscopic element composed of a blazed diffraction grating, and the blaze wavelength of the blazed diffraction grating is 1000 nm or more, for example, 1200 nm. When the blaze wavelength is set to the long wavelength side in this way, as shown in (b) of FIG. 13, for example, the diffraction efficiency of the first-order light of the spectroscopic portion 32 on the long wavelength side is high, while the diffraction efficiency of the first-order light on the short wavelength side is low. In addition, on the short wavelength side, the diffraction efficiency of the second-order light is higher than the diffraction efficiency of the first-order light. Therefore, in the spectroscopic measurement system 1, using such a spectroscopic element, the first-order light of the first light L1 is detected for the first wavelength range on the long wavelength side, and the second-order light of the second light L2 is detected for the second wavelength range on the short wavelength side. Accordingly, light in a wide wavelength range can be spectrally separated and detected with sufficient diffraction efficiency.

In the spectroscopic measurement system 1, the detection region of the light detection portion 34 that detects the first-order light of the first light L1 in the first state is common to the detection region of the light detection portion 34 that detects the second-order light of the second light L2 in the second state. In this example, the first-order light and the second-order light are detected in the same light detection region 34a. Accordingly, the width per unit wavelength in the light detection portion 34 can be ensured to be wider compared to, for example, a case where the first-order light of the first light L1 and the second-order light of the second light L2 are detected in different regions of the light detection portion 34.

### [Modification Examples of Embodiment]

In the spectroscopic detection method, step S11 was performed before step S12; however, step S11 may be performed after step S12. The spectroscopic detection method may further include, in addition to step S11 and step S12, a step of detecting the first-order light and the second-order light in the third state (hereinafter also referred to as "third state step") and a step of detecting the first-order light and the second-order light in the fourth state (hereinafter also referred to as "fourth state step").

In the third state step, first, the filter selection portion 4 places the third filter 23 on the optical path to switch the detection state to the third state. In this third state, the light irradiation portion 3 irradiates the object B with the irradiation light P1. The irradiation light P1 reflected or scattered by the object B is incident on the third filter 23, and the third light L3 that has transmitted through the third filter 23 is spectrally separated by the spectroscopic portion 32. The first-order light of the first portion C1 of the third light L3 from the spectroscopic portion 32 and the second-order light of the second portion C2 of the third light L3 are incident on the light detection region 34a of the light detection portion 34 and are detected by the light detection portion 34.

In the fourth state step, first, the filter selection portion 4 places the fourth filter 24 on the optical path to switch the detection state to the fourth state. In this fourth state, the light irradiation portion 3 irradiates the object B with the irradiation light P1. The irradiation light P1 reflected or scattered by the object B is incident on the fourth filter 24, and the fourth light L4 that has transmitted through the fourth filter 24 is spectrally separated by the spectroscopic portion 32. The first-order light of the third portion C3 of the fourth light L4 from the spectroscopic portion 32 and the second-order light of the fourth portion C4 of the fourth light L4 are incident on the light detection region 34a of the light detection portion 34 and are detected by the light detection portion 34.

The order of step S11, step S12, the third state step, and the fourth state step is not particularly limited, and may be in any order. In this case, in the spectroscopic measurement system 1, the processing portion 6 may generate a spectroscopic image further based on the detection result of the first-order light and the second-order light of the third light L3 in the third state and the detection result of the first-order light and the second-order light of the fourth light L4 in the fourth state, in addition to the detection result of the first-order light of the first light L1 in the first state and the detection result of the second-order light of the second light L2 in the second state.

Incidentally, the spectroscopic detection method may include, in addition to step S11 and step S12, the third state step and may not include the fourth state step. In this case, in the spectroscopic measurement system 1, the processing portion 6 may generate a spectroscopic image further based on the first-order light of the first portion C1 of the third light L3 detected in the third state and the second-order light of the second portion C2 of the third light L3, in addition to the detection result of the first-order light of the first light L1 in the first state and the detection result of the second-order light of the second light L2 in the second state. Alternatively, the spectroscopic detection method may include, in addition to step S11 and step S12, the fourth state step and may not include the third state step. In this case, in the spectroscopic measurement system 1, the processing portion 6 may generate a spectroscopic image further based on the first-order light of the third portion C3 of the fourth light L4 detected in the fourth state and the second-order light of the fourth portion C4 of the fourth light L4, in addition to the detection result of the first-order light of the first light L1 in the first state and the detection result of the second-order light of the second light L2 in the second state. Accordingly, a spectroscopic image can be generated further based on the detection result of the third light L3 (fourth light L4) having wavelengths in both the first wavelength range and the second wavelength range.

The spectroscopic measurement system 1 may generate a spectroscopic image based on detection results in at least two of the first to fourth detection states. For example, the spectroscopic measurement system 1 may generate a spectroscopic image based on the detection result in the first state and the detection result in the third state or the fourth state. Alternatively, the spectroscopic measurement system 1 may generate a spectroscopic image based on the detection result in the second state and the detection result in the third state or the fourth state.

### [First Modification Example]

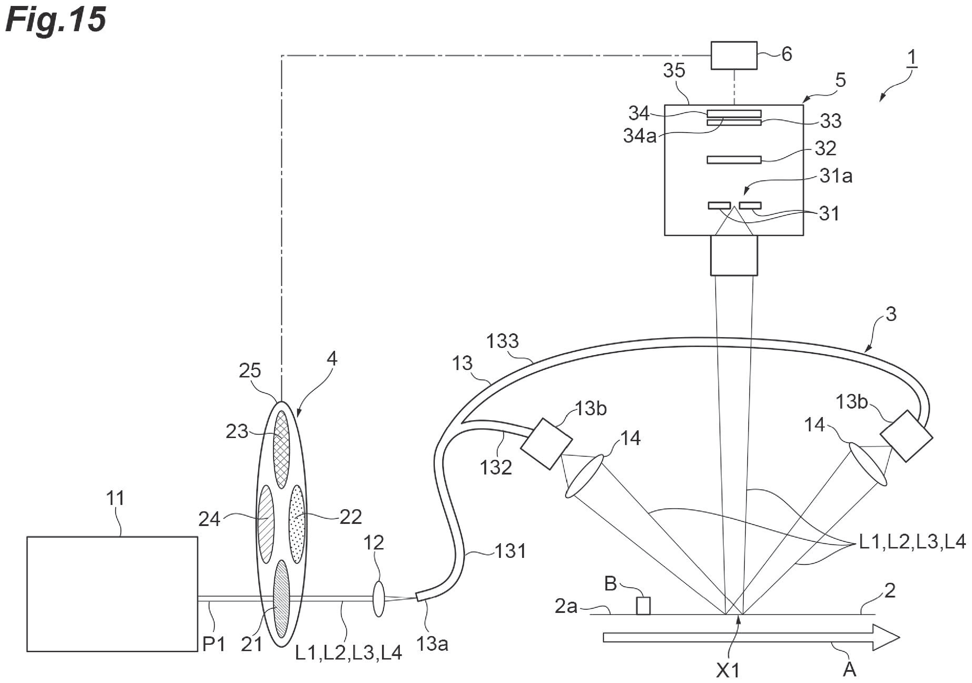

In the spectroscopic measurement system 1 according to the first modification example shown in FIG. 15, the filter selection portion 4 in the above-described embodiment is disposed between the light source 11 and the lens 12. In the first modification example, the irradiation light P1 output from the light source 11 is directly incident on any one of the filters 21 to 24 of the filter selection portion 4. The first light L1 that has transmitted through the first filter 21 is incident on the guide member 13 and irradiates the object B. The first light L1 reflected or scattered by the object B is incident on the spectrometer 5, and is spectrally separated and detected in the spectrometer 5. Similarly, the second light L2 that has transmitted through the second filter 22, the third light L3 that has transmitted through the third filter 23, and the fourth light L4 that has transmitted through the fourth filter 24 are also spectrally separated and detected in the spectrometer 5. With the first modification example as well, similarly to the above-described embodiment, light in a wide wavelength range can be spectrally separated and detected with sufficient diffraction efficiency, while also ensuring the dynamic range and wavelength resolution.

### [Second Modification Example]

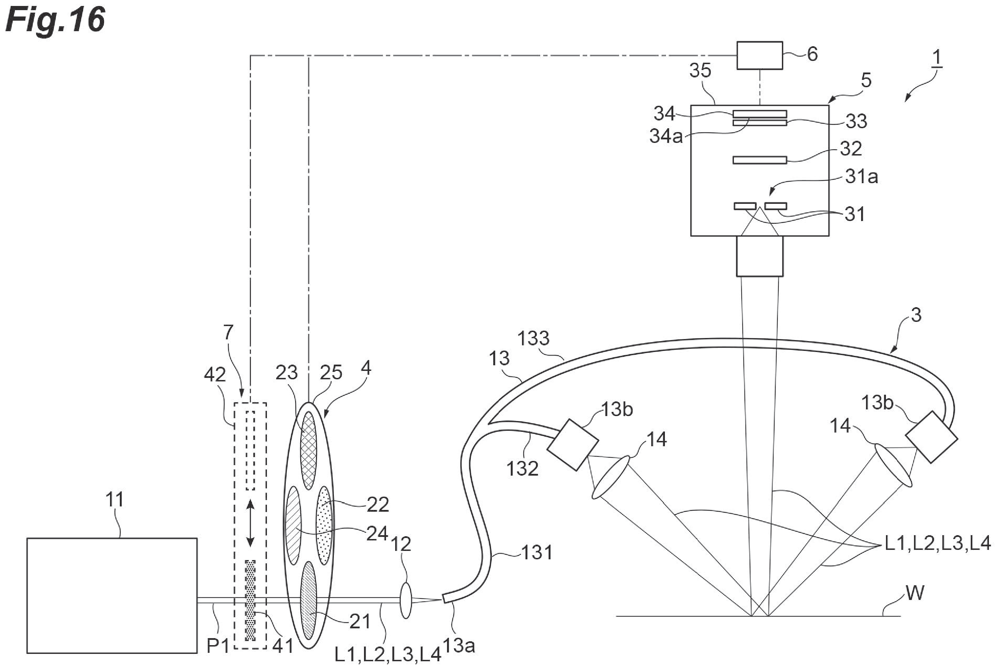

In the second modification example shown in FIG. 16, similarly to the first modification example, the filter selection portion 4 is disposed between the light source 11 and the lens 12. Furthermore, the spectroscopic measurement system 1 further includes a switching portion 7 disposed upstream of the filter selection portion 4 on the optical path (on the side closer to the light source 11). In this example, the switching portion 7 is disposed between the light source 11 and the filter selection portion 4. The switching portion 7 includes a switching filter 41 and a body portion 42 on which the switching filter 41 is operably provided. The switching portion 7 places the switching filter 41 on the optical path of the irradiation light P1 by operating the body portion 42 with a drive portion (not shown). The operation of the switching portion 7 (drive portion) is controlled by the processing portion 6. The light that has transmitted through the switching filter 41 is incident on any one of the filters 21 to 24.

The switching filter 41 is a long-pass filter that transmits light of 800 nm or more (transmission band) and blocks light of 800 nm or less. In this example, the first light L1 in a wavelength range of 800 nm to 1650 nm, which is part of the irradiation light P1 including a wavelength range of 387.5 nm to 1650 nm, transmits through the switching filter 41, and the second light L2 in a wavelength range of 387.5 nm to 800 nm or less, which is part of the irradiation light P1, is blocked. The switching portion 7 is capable of switching between a first reference state in which the switching filter 41 is not placed on the optical path and both the first light L1 and the second light L2 (irradiation light P1) are incident on the filter selection portion 4, and a second reference state in which the switching filter 41 is placed on the optical path and the second light L2 is blocked (the state in which the first light L1 is incident on the filter selection portion 4).

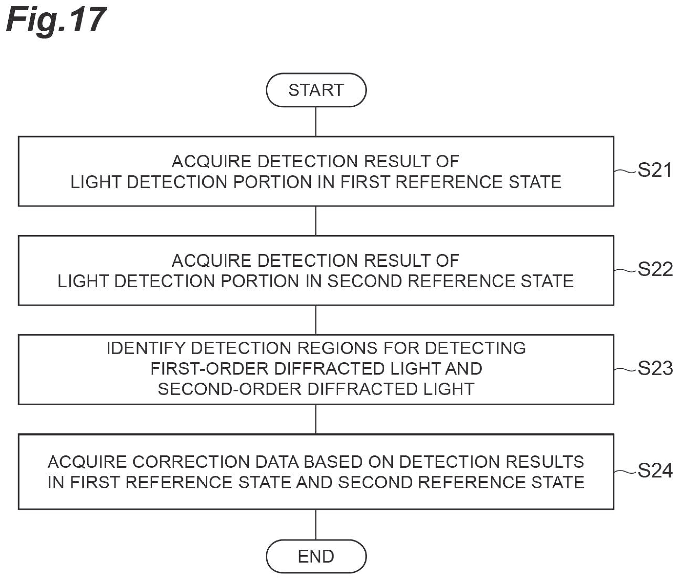

Next, a spectroscopic detection method using the spectroscopic measurement system 1 according to the second modification example will be described. As shown in FIG. 17, the spectroscopic detection method further includes an acquisition step (steps S21 to S24) in addition to steps S11 to S13 of the above-described embodiment. The acquisition step is performed for each of the filters 21 to 24. Hereinafter, the acquisition steps performed for the filters 21 to 24 are referred to as the first acquisition step, the second acquisition step, the third acquisition step, and the fourth acquisition step, respectively. The first acquisition step, the second acquisition step, the third acquisition step, and the fourth acquisition step are performed before steps S11 to S13 of the above-described embodiment. The details of the fourth acquisition step will be described below, but the same applies to the first to third acquisition steps.

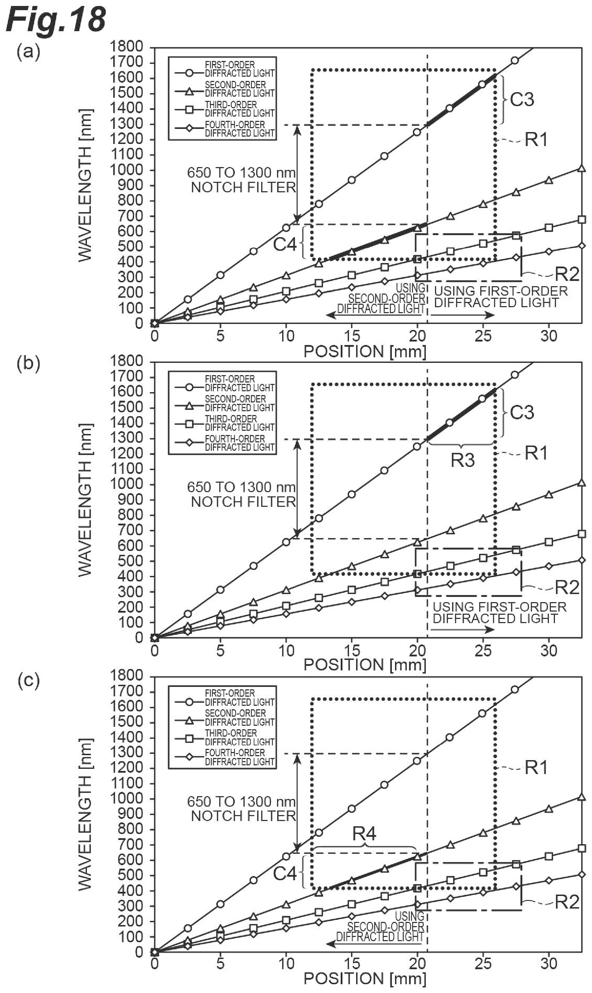

First, instead of the conveying portion 2, a white reference surface W (FIG. 16) is placed at a position where light from the guide member 13 is irradiated. Light is uniformly reflected by the reference surface W. Then, the filter selection portion 4 places the fourth filter 24 on the optical path, and the switching portion 7 switches the state to the first reference state in which the switching filter 41 is not placed on the optical path. In this first reference state, the light irradiation portion 3 outputs the irradiation light P1. The irradiation light P1 is incident on the fourth filter 24, and the fourth light L4 that has transmitted through the fourth filter 24 is reflected by the reference surface W. The fourth light L4 reflected by the reference surface W is spectrally separated by the spectroscopic portion 32. The diffracted light of the fourth light L4 from the spectroscopic portion 32 is incident on the light detection region 34a of the light detection portion 34 and is detected by the light detection portion 34 (step S21). In step S21, since the switching filter 41 that blocks the second light L2 is not placed on the optical path, as shown in (a) of FIG. 18, both the first-order light of the third portion C3 of the fourth light L4 and the second-order light of the fourth portion C4 of the fourth light L4 are detected.

Subsequently, the switching portion 7 switches the state to the second reference state in which the switching filter 41 is placed on the optical path. In this second reference state, the light irradiation portion 3 outputs the irradiation light P1. The irradiation light P1 is incident on the switching filter 41, and the first light L1 that has transmitted through the switching filter 41 is incident on the fourth filter 24. When the first light L1 is incident on the fourth filter 24, the light of the third portion C3 (1300 nm to 1650 nm) of the fourth light L4 transmits through the fourth filter 24. The light of the third portion C3 of the fourth light L4 emitted from the fourth filter 24 irradiates the object B. The light of the third portion C3 of the fourth light L4 reflected or scattered by the object B is spectrally separated by the spectroscopic portion 32. The diffracted light of the third portion C3 of the fourth light L4 from the spectroscopic portion 32 is incident on the light detection region 34a of the light detection portion 34 and is detected by the light detection portion 34 (step S22). In step S22, since the switching filter 41 that blocks the second light L2 is placed on the optical path, as shown in (b) of FIG. 18, only the first-order light of the third portion C3 of the fourth light L4 is detected.

The detection result (first luminance) by the light detection portion 34 in the first reference state includes the luminance of both the first-order light of the third portion C3 of the fourth light L4 and the second-order light of the fourth portion C4 of the fourth light L4, and the detection result (second luminance) by the light detection portion 34 in the second reference state includes only the luminance of the first-order light of the third portion C3 of the fourth light L4. For this reason, as shown in (c) of FIG. 18, the processing portion 6 can obtain a third luminance corresponding to the second-order light of the fourth portion C4 of the fourth light L4 by subtracting the second luminance from the first luminance at each position on the light detection portion 34. Here, each of the first luminance, the second luminance, and the third luminance includes the luminance at each position on the light detection portion 34. The processing portion 6 compares the first luminance and the second luminance at each position on the light detection portion 34, and identifies the range in which the second luminance is, for example, 80% or more of the first luminance as a detection region R3 (FIG. 18(b)) for detecting the first-order light. In addition, the processing portion 6 compares the first luminance and the third luminance at each position on the light detection portion 34, and identifies the range in which the third luminance is 80% or more of the first luminance as a detection region R4 (FIG. 18(c)) for detecting the second-order light. In this example, the detection region R3 is in the range of 21 mm to 26 mm, and the detection region R4 is in the range of approximately 13 mm to 21 mm. This identification result can be used as the filter data described above. Namely, in the above-described embodiment, the processing portion 6 stored in advance the type of diffracted light (filter data) detected by the light detection portion 34 in each of the first to fourth detection states; however, in the second modification example, the processing portion 6 identifies the regions where the first-order light and the second-order light are incident based on the detection results by the light detection portion 34 in the first reference state and the second reference state, and stores the identification result as filter data (step S23).

Subsequently, the processing portion 6 acquires, for each pixel, correction data for correcting the luminance based on the detection result by the light detection portion 34 in the first reference state and the detection result by the light detection portion 34 in the second reference state (step S24). This correction data is used in step S13 (the step of generating a spectroscopic image).

In the first acquisition step, the second acquisition step, and the third acquisition step, the same processing as the above-described fourth acquisition step is performed with the filters 21 to 23 placed on the optical path, respectively. That is, in the first acquisition step, filter data for the first filter 21 is acquired, in the second acquisition step, filter data for the second filter 22 is acquired, and in the third acquisition step, filter data for the third filter 23 is acquired.

In the spectroscopic detection method according to the second modification example, steps S11 to S13 of the above-described embodiment are performed after the above-described first to fourth acquisition steps are performed. In step S13, the processing portion 6 determines, based on the detection result of the light detection portion 34 in the first reference state and the detection result of the light detection portion 34 in the second reference state, that the light detected by the light detection portion 34 in step S11 is the first-order light of the first light L1, and also determines that the light detected by the light detection portion 34 in step S12 is the second-order light of the second light L2. In this example, the processing portion 6 determines that the light detected in step S11 is the first-order light of the first light L1 based on the identification result (filter data) in step S23 of the first acquisition step. In addition, the processing portion 6 determines that the light detected in step S12 is the second-order light of the second light L2 based on the identification result (filter data) in step S23 of the second acquisition step.

In step S13, the processing portion 6 generates a spectroscopic image from the detection result of the first-order light of the first light L1 in the first state and the detection result of the second-order light of the second light L2 in the second state, based on the above-described determination result. At this time, the processing portion 6 generates the spectroscopic image after correcting the luminance based on the correction data acquired in step S24.

With the second modification example as well, similarly to the above-described embodiment, light in a wide wavelength range can be spectrally separated and detected with sufficient diffraction efficiency, while also ensuring the dynamic range and wavelength resolution. In addition, the spectroscopic measurement system 1 according to the second modification example includes the switching portion 7 disposed upstream of the filter selection portion 4 on the optical path. The switching portion 7 includes the switching filter 41 that transmits the first light L1 and blocks the second light L2. The switching portion 7 is capable of switching between the state in which the switching filter 41 is placed upstream of the filter selection portion 4 on the optical path and the second light L2 is blocked, and the state in which the switching filter 41 is not placed upstream of the filter selection portion 4 on the optical path and both the first light L1 and the second light L2 are incident on the filter selection portion 4. Accordingly, for example, even when the characteristics of the plurality of selection filters (filters 21 to 24) are not stored in advance, it becomes possible to determine, by executing the processing of steps S21 to S24, whether the light detected by the light detection portion 34 while using a certain selection filter is the first-order light of the first light L1 or the second-order light of the second light L2. Accordingly, even without the user inputting in advance the transmission wavelength range for each of the filters 21 to 24, the above-described determination becomes possible by acquiring filter data for each of the filters 21 to 24 from the first to fourth acquisition steps.

The spectroscopic detection method according to the second modification example includes steps S21 to S24 before steps S11 to S13, and in step S13, the processing portion 6 determines, based on the detection result of the light detection portion 34 in the first reference state and the detection result of the light detection portion 34 in the second reference state, that the light detected by the light detection portion 34 in step S11 is the first-order light of the first light L1, and also determines that the light detected by the light detection portion 34 in step S12 is the second-order light of the second light L2. In this example, in step S13, the processing portion 6 determines that the light detected in step S11 is the first-order light of the first light L1 based on the identification result (filter data) in step S23 of the first acquisition step. In addition, the processing portion 6 determines that the light detected in step S12 is the second-order light of the second light L2 based on the identification result (filter data) in step S23 of the second acquisition step. Accordingly, it becomes possible to determine whether the light detected by the light detection portion 34 while using the first filter 21 or the second filter 22 is the first-order light of the first light L1 or the second-order light of the second light L2.

In the second modification example described above, step S21 was performed before step S22; however, step S21 may be performed after step S22.

When the spectroscopic detection method includes at least the third state step of the above-described embodiment (for example, when the spectroscopic detection method includes step S11 and the third state step), in step S13, the processing portion 6 determines that the light detected in the third state step is the first-order light or the second-order light of the third light L3 based on the identification result (filter data) in step S23 of the third acquisition step. In this example, as shown in FIG. 7, the processing portion 6 determines that the light incident at positions of 12 mm to 17.5 mm is the first-order light of the third light L3, and determines that the light incident at positions of 17.5 mm to 26 mm is the second-order light of the third light L3. Then, the processing portion 6 generates a spectroscopic image based on the detection results of the first-order light and the second-order light of the third light L3 in the third state.

When the spectroscopic detection method includes at least the fourth state step of the above-described embodiment (for example, when the spectroscopic detection method includes step S11 and the fourth state step), in step S13, the processing portion 6 determines that the light detected in the fourth state step is the first-order light or the second-order light of the fourth light L4 based on the identification result (filter data) in step S23 of the fourth acquisition step. In this example, as shown in (b) of FIG. 18, the processing portion 6 determines that the light incident at positions of 21 mm to 26 mm (detection region R3) is the first-order light of the fourth light L4. Then, as shown in (c) of FIG. 18, the processing portion 6 determines that the light incident at positions of approximately 13 mm to 21 mm (detection region R4) is the second-order light of the fourth light L4. Then, the processing portion 6 generates a spectroscopic image based on the detection results of the first-order light and the second-order light of the fourth light L4 in the fourth state.

### [Third Modification Example]

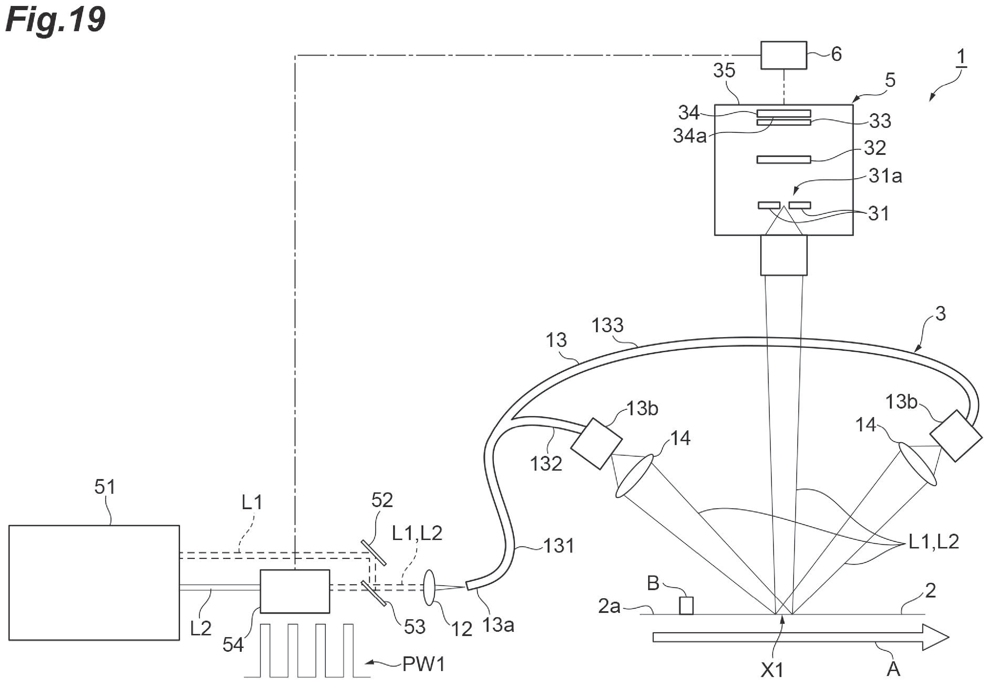

In the spectroscopic measurement system 1 according to the third modification example shown in FIG. 19, the filter selection portion 4 that constituted the wavelength switching means in the above-described embodiment is not provided, and the wavelength switching means is constituted by the light irradiation portion 3. In the third modification example, the light irradiation portion 3 (wavelength switching means) does not include the light source 11, and includes a light output portion 51, a mirror 52, a dichroic mirror 53, and a light modulator 54 (light restriction portion). The light output portion 51 outputs the first light L1 and the second light L2 separated from each other. In this example, the first wavelength range of the first light L1 is 800 nm to 1650 nm, and the second wavelength range of the second light L2 is 387.5 nm to 800 nm.

The first light L1 is reflected by the mirror 52 and the dichroic mirror 53, focused by the lens 12, and is incident on the guide member 13. On the other hand, the second light L2 is incident on the light modulator 54. The light modulator 54 is disposed downstream of the light output portion 51, and in this example, is disposed between the light output portion 51 and the lens 12. The light modulator 54 is, for example, a photoelastic modulator that modulates the polarization state of incident light at a fixed frequency. By the processing portion 6 controlling the light modulator 54, the light modulator 54 is capable of restricting downstream progression of the second light L2 by modulating the second light L2, and is capable of switching the restriction state of the second light L2. When the light modulator 54 does not modulate the second light L2, the second light L2 is focused by the lens 12 and is incident on the guide member 13.

The processing portion 6 controls the light modulator 54 to alternately switch the detection state in the spectroscopic measurement system 1 between the first state and the second state at high speed. In the third modification example, the first state is a state in which the light modulator 54 restricts downstream progression of the second light L2. For this reason, in the first state, only the first light L1 is incident on the guide member 13. The first light L1 incident on the guide member 13 is, similarly to the first modification example, reflected or scattered by the object B, incident on the spectrometer 5, and spectrally separated and detected in the spectrometer 5. On the other hand, the second state is a state in which the light modulator 54 does not restrict downstream progression of the second light L2. For this reason, in the second state, both the first light L1 and the second light L2 are incident on the guide member 13. The first light L1 and the second light L2 incident on the guide member 13 are, similarly to the first modification example, reflected or scattered by the object B, incident on the spectrometer 5, and spectrally separated and detected in the spectrometer 5. In the third modification example, since the detection state is alternately switched between the first state and the second state at high speed, the output of the second light L2 emitted from the light modulator 54 has a pulse waveform PW1. On the other hand, since the first light L1 is not restricted by the light modulator 54, the first light L1 is continuously lit between the first state and the second state. In this way, the wavelength of light irradiated on the object B differs between the first state and the second state. In the third modification example, the light irradiation portion 3 constitutes the wavelength switching means by being configured such that the wavelength of light irradiated on the object B is variable.

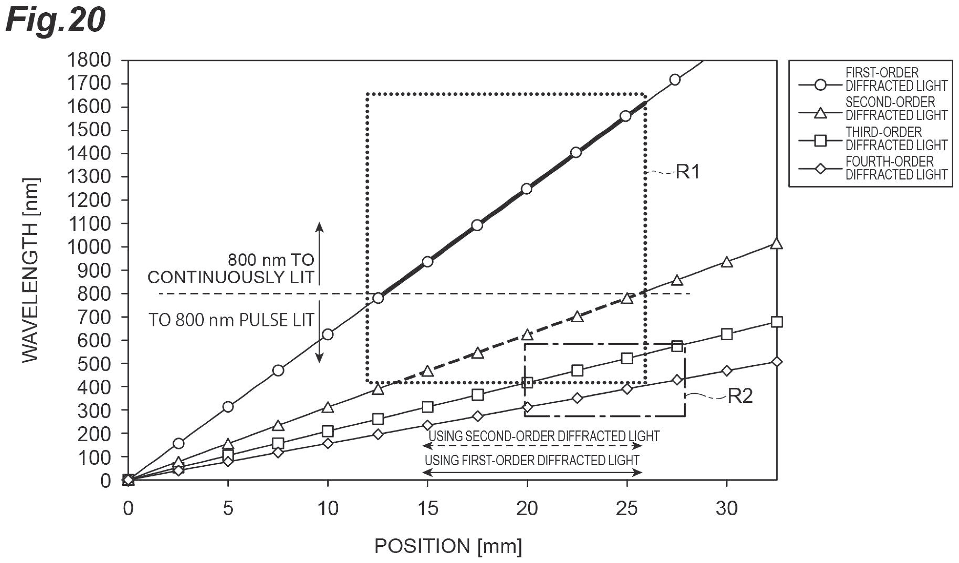

With reference to FIG. 20, the diffracted light detected by the light detection portion 34 in the first state and the second state will be described. In the first state, since only the first light L1 is incident on the spectrometer 5, only the first-order light of the first light L1 is detected by the light detection portion 34. On the other hand, in the second state, both the first light L1 and the second light L2 are incident on the spectrometer 5. For this reason, both the first-order light of the first light L1 and the second-order light of the second light L2 are incident on the light detection region 34a (detection region R1). That is, in the second state, the first-order light and the second-order light are detected by the light detection portion 34 in a state of overlapping in the light detection region 34a. In FIG. 20, the wavelength range detected in both the first state and the second state is indicated as "800 nm to continuously lit," and the wavelength range detected only in the second state is indicated as "to 800 nm pulse lit."

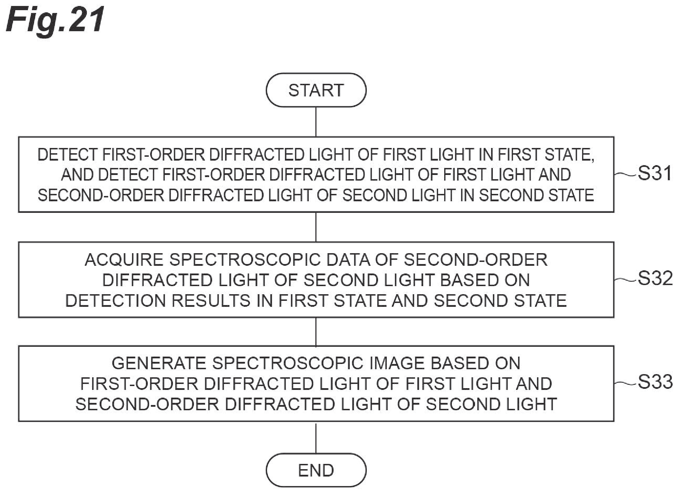

A spectroscopic detection method using the spectroscopic measurement system 1 according to the third modification example will be described with reference to FIG. 21. First, the first-order light of the first light L1 is detected in the first state, and the first-order light of the first light L1 and the second-order light of the second light L2 are detected in the second state (step S31). In step S31, the processing portion 6 controls the light modulator 54 to alternately switch the detection state between the first state and the second state at high speed. In the first state, the second light L2 is restricted by the light modulator 54, while the first light L1 is incident on the guide member 13, reflected or scattered by the object B, and incident on the spectrometer 5. The first light L1 is spectrally separated by the spectroscopic portion 32, and the first-order light of the first light L1 is incident on the light detection region 34a of the light detection portion 34 and is detected by the light detection portion 34. In the second state, since the second light L2 is not restricted by the light modulator 54, both the first light L1 and the second light L2 are incident on the guide member 13, reflected or scattered by the object B, and incident on the spectrometer 5. Both the first light L1 and the second light L2 are spectrally separated by the spectroscopic portion 32, and the first-order light of the first light L1 and the second-order light of the second light L2 are incident on the light detection region 34a of the light detection portion 34 and are detected by the light detection portion 34.

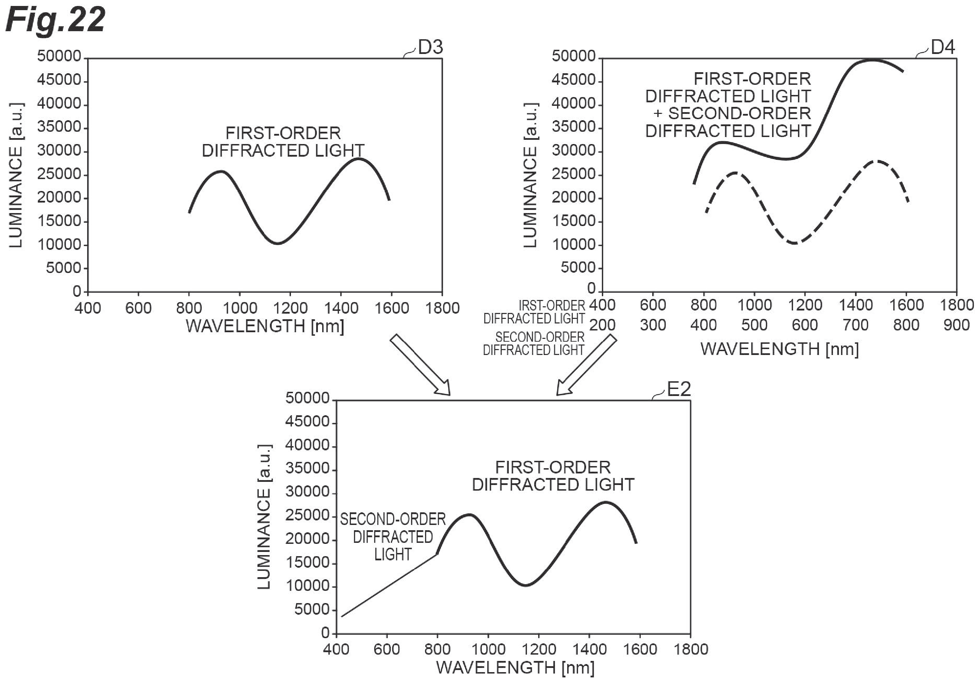

Subsequently, the processing portion 6 acquires spectroscopic data of the second-order light of the second light L2 based on the detection results in the first state and the second state (step S32). As shown in FIG. 22, the detection result in the first state (spectroscopic data D3) shows the luminance of the first-order light of the first light L1, whereas the detection result in the second state (spectroscopic data D4) shows the sum of the luminances of the first-order light of the first light L1 and the second-order light of the second light L2. In the spectroscopic data D4, the luminance of the first-order light is indicated by a dotted line, and the sum of the luminances of the first-order light and the second-order light is indicated by a solid line. The sum is the sum of the luminance of the first-order light in a wavelength range of 800 nm to 1650 nm and the luminance of the second-order light in a wavelength range of 387.5 nm to 800 nm. For this reason, the processing portion 6 can acquire the spectroscopic data of the second-order light of the second light L2 (the luminance corresponding to "second-order diffracted light" in the spectroscopic image E2) by subtracting the spectroscopic data D3 from the spectroscopic data D4. The processing portion 6 generates a spectroscopic image E2 for the first-order light of the first light L1 and the second-order light of the second light L2 based on the acquired spectroscopic data of the second-order light of the second light L2 and the spectroscopic data D3 (step S33).

With the third modification example as well, similarly to the above-described embodiment, light in a wide wavelength range can be spectrally separated and detected with sufficient diffraction efficiency, while also ensuring the dynamic range and wavelength resolution. In addition, in the spectroscopic measurement system 1 according to the third modification example, the light irradiation portion 3 is configured such that the wavelength of light irradiated on the object B is variable, the wavelength switching means is constituted by the light irradiation portion 3, and the detection state is switched between the first state and the second state by changing the wavelength of light irradiated on the object B from the light irradiation portion 3. Accordingly, the wavelength switching means can be constituted by the light irradiation portion 3 configured such that the wavelength of light irradiated on the object B is variable.

In addition, the light irradiation portion 3 includes the light output portion 51 that outputs the first light L1 and the second light L2 separated from each other, and the light modulator 54 disposed downstream of the light output portion 51 on the optical path, the light modulator 54 is capable of restricting downstream progression of the second light L2 output from the light output portion 51 and is capable of switching the restriction state of the second light L2, and the detection state is switched between the first state and the second state by switching the restriction state by the light modulator 54. Accordingly, the wavelength switching means can be constituted by the light output portion 51 that outputs the first light L1 and the second light L2 separated from each other, and the light modulator 54 capable of switching the restriction state of the second light L2.

In addition, the light modulator 54 restricts the second light L2 and allows the first light L1 to proceed downstream in the first state, and allows the first light L1 and the second light L2 to proceed downstream without restriction in the second state. Accordingly, the first state and the second state can be switched by allowing the first light L1 and the second light L2 to proceed without restriction in the second state and restricting only the second light L2 in the first state. Therefore, the switching operation of the restriction state by the light modulator 54 can be simplified.

In addition, in the spectroscopic measurement system 1, the detection state is alternately switched between the first state and the second state by switching the restriction state by the light modulator 54. Accordingly, comprehensive measurement over a wide wavelength range becomes possible.

In the third modification example, the light modulator 54 was capable of restricting downstream progression of the second light L2; however, the light modulator 54 may be capable of restricting downstream progression of the first light L1 and may be capable of switching the restriction state of the first light L1. In this case, the first state is a state in which the light modulator 54 does not restrict downstream progression of the first light L1, and the second state is a state in which the light modulator 54 restricts downstream progression of the first light L1. For this reason, in the first state, both the first light L1 and the second light L2 are incident on the guide member 13, and in the second state, only the second light L2 is incident on the guide member 13. In this case, in step S33, the processing portion 6 can acquire the spectroscopic data of the first-order light by subtracting the detection result in the second state from the detection result in the first state.

In the third modification example, the light irradiation portion 3 included the light modulator 54 capable of restricting downstream progression of the second light L2; however, the light irradiation portion 3 may include a chopper or the like capable of restricting downstream progression of the second light L2 instead of the light modulator 54.

In the third modification example, the processing portion 6 controlled the light modulator 54 to alternately switch the detection state between the first state and the second state at high speed; however, the processing portion 6 need not switch the detection state at high speed. In addition, the processing portion 6 need not switch the detection state alternately, and may, for example, switch the detection state between the first state and the second state once. In the third modification example, step S31 was performed before step S32; however, step S31 may be performed after step S32.

### [Fourth Modification Example]

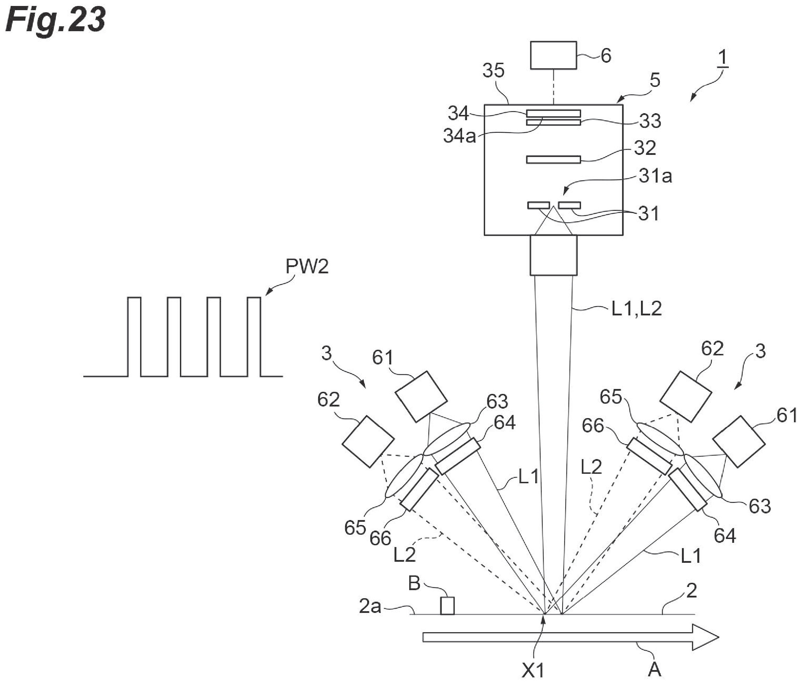

In the spectroscopic measurement system 1 according to the fourth modification example shown in FIG. 23, the filter selection portion 4 that constituted the wavelength switching means in the above-described embodiment is not provided, and the wavelength switching means is constituted by the light irradiation portion 3. The light irradiation portion 3 (wavelength switching means) does not include the light source 11, the lens 12, the guide member 13, or the lenses 14. The light irradiation portion 3 includes a pair of first light sources 61, a pair of second light sources 62, a pair of lenses 63, a pair of lenses 64, a pair of lenses 65, and a pair of lenses 66.

The first light source 61 outputs the first light L1 in the first wavelength range (800 nm to 1650 nm or more). The pair of first light sources 61 are disposed on one side and the other side in the conveying direction A with respect to the irradiation position X1. The first light L1 output from one first light source 61 is focused by one of the pair of lenses 63 and one of the pair of lenses 64, and irradiates the object B at the irradiation position X1 from the one side (for example, upstream side) in the conveying direction A. The first light L1 output from the other first light source 61 is focused by the other of the pair of lenses 63 and the other of the pair of lenses 64, and irradiates the object B at the irradiation position X1 from the other side (for example, downstream side) in the conveying direction A.

The second light source 62 outputs the second light L2 in the second wavelength range (387.5 nm to 800 nm or less). The pair of second light sources 62 are disposed on one side and the other side in the conveying direction A with respect to the irradiation position X1. The second light L2 output from one second light source 62 is focused by one of the pair of lenses 65 and one of the pair of lenses 66, and irradiates the object B at the irradiation position X1 from the one side (for example, upstream side) in the conveying direction A. The second light L2 output from the other second light source 62 is focused by the other of the pair of lenses 65 and the other of the pair of lenses 66, and irradiates the object B at the irradiation position X1 from the other side (for example, downstream side) in the conveying direction A. The first light L1 from the first light source 61 and the second light L2 from the second light source 62 are reflected or scattered by the object B, incident on the spectrometer 5, and spectrally separated and detected in the spectrometer 5.

In the fourth modification example, the on/off state is switched by pulse-driving the second light source 62, and the detection state is alternately switched between the first state and the second state at high speed. For this reason, the output of the second light L2 has a pulse waveform PW2. In this example, the second light source 62 is an LED (Light Emitting Diode) light source. On the other hand, the first light source 61 does not have its on/off state switched, and is on in both the first state and the second state. In this example, the first light source 61 is a halogen lamp light source. In this case, cost reduction can be achieved compared to a case where the first light source 61 is also an LED. The first light source 61 may be an LED light source. In the first state, the first light source 61 is on and the second light source 62 is off. For this reason, in the first state, only the first light L1 is irradiated on the object B. In addition, in the second state, both the first light source 61 and the second light source 62 are on. For this reason, in the second state, both the first light L1 and the second light L2 are irradiated on the object B. In this way, the wavelength of light irradiated on the object B differs between the first state and the second state. In the fourth modification example, the light irradiation portion 3 constitutes the wavelength switching means by being configured such that the wavelength of light irradiated on the object B is variable.

The diffracted light detected in the first state and the second state of the fourth modification example is the same as that of the third modification example shown in FIG. 20. Namely, in the first state, the first-order light of the first light L1 is detected by the light detection portion 34. In the second state, both the first-order light of the first light L1 and the second-order light of the second light L2 are detected by the light detection portion 34.

The spectroscopic detection method using the spectroscopic measurement system 1 according to the fourth modification example is performed in the same manner as the spectroscopic detection method using the spectroscopic measurement system 1 according to the third modification example shown in FIG. 21. First, the on/off state is switched by pulse-driving the second light source 62, and the detection state is alternately switched between the first state and the second state at high speed. In the first state, the first light source 61 is on and the second light source 62 is off, and the first-order light of the first light L1 is detected by the light detection portion 34. In the second state, the first light source 61 is on and the second light source 62 is on, and the first-order light of the first light L1 and the second-order light of the second light L2 are detected by the light detection portion 34 (step S31).

Subsequently, the processing portion 6 acquires spectroscopic data of the second-order light of the second light L2 based on the first-order light of the first light L1 detected in step S31 and the first-order light of the first light L1 and the second-order light of the second light L2 detected in step S32 (step S32). The processing portion 6 generates a spectroscopic image E2 for the first-order light and the second-order light based on the acquired spectroscopic data of the second-order light of the second light L2 and the spectroscopic data D3 (FIG. 22) (step S33).

With the fourth modification example as well, similarly to the above-described embodiment, light in a wide wavelength range can be spectrally separated and detected with sufficient diffraction efficiency, while also ensuring the dynamic range and wavelength resolution. In addition, in the spectroscopic measurement system 1 according to the fourth modification example, the light irradiation portion 3 includes the first light source 61 that outputs the first light L1 and the second light source 62 that outputs the second light L2, and the detection state is switched between the first state and the second state by switching the on/off state of the second light source 62. Accordingly, the wavelength switching means can be constituted by the first light source 61 and the second light source 62, of which the on/off state of at least one (in this example, the second light source 62) is switched.

In the fourth modification example, in the first state, the first light source 61 is on and the second light source 62 is off, and in the second state, both the first light source 61 and the second light source 62 are on. Accordingly, the first state and the second state can be switched by turning the second light source 62 on/off while keeping the first light source 61 on, and the operation of the first light source 61 and the second light source 62 can be simplified.

In the fourth modification example, the on/off state is switched by pulse-driving the second light source 62, and the detection state is alternately switched between the first state and the second state. Accordingly, comprehensive measurement over a wide wavelength range becomes possible.

In the fourth modification example, the detection state was switched between the first state and the second state by switching the on/off state of the second light source 62; however, the detection state may be switched between the first state and the second state by switching the on/off state of the first light source 61. In this case, in the first state, both the first light source 61 and the second light source 62 are on, and in the second state, the first light source 61 is off and the second light source 62 is on. In addition, the on/off state may be switched by pulse-driving the first light source 61, and the detection state may be alternately switched between the first state and the second state.

In the fourth modification example, the on/off state was switched by pulse-driving the second light source 62, and the detection state was alternately switched between the first state and the second state at high speed; however, the second light source 62 need not be pulse-driven. In addition, the on/off state of the second light source 62 need not be alternately switched, and for example, the second light source 62 may have its on/off state switched once.

In the fourth modification example, the number of the first light sources 61 was two and the number of the second light sources 62 was two; however, the number of the first light sources 61 may be any number of one or more, and the number of the second light sources 62 may be any number of one or more.

### [Fifth Modification Example]

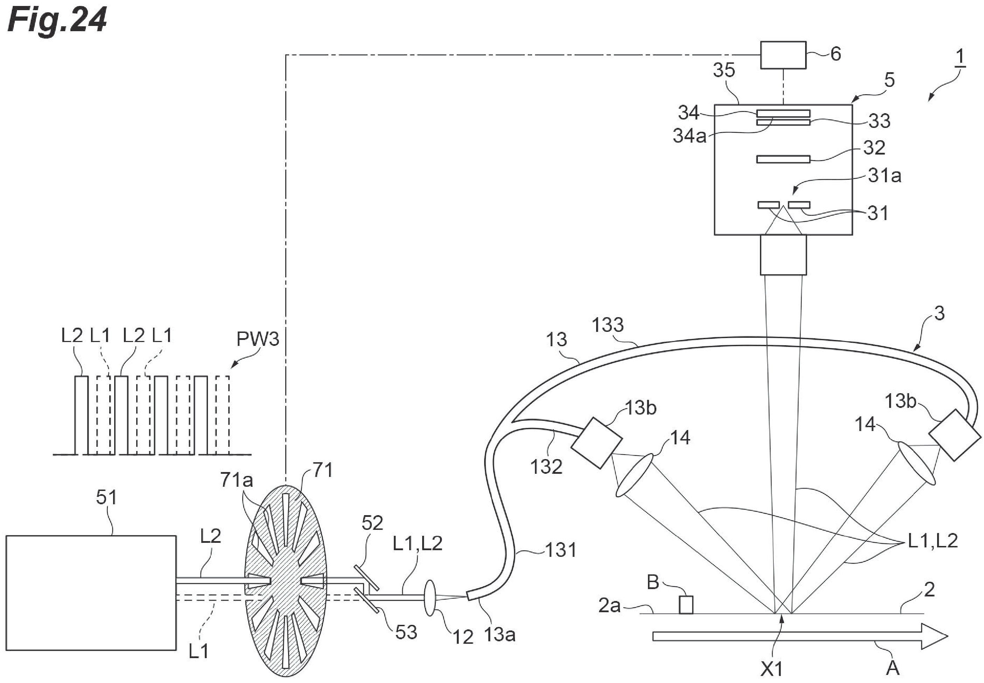

As in the fifth modification example shown in FIG. 24, a chopper 71 may be provided as a light restriction portion instead of the light modulator 54 of the third modification example. The chopper 71 is disposed downstream of the light output portion 51, and in this example, is disposed between the light output portion 51 and the lens 12. The first light L1 and the second light L2 from the light output portion 51 are incident on the chopper 71.

The chopper 71 is, for example, a disk-shaped member provided with a slit 71a. The chopper 71 allows light passing through the slit 71a to proceed downstream and restricts downstream progression of light incident on portions other than the slit 71a. By rotating the chopper 71 with a drive portion (not shown), the chopper 71 alternately restricts the first light L1 and the second light L2. In the fifth modification example, the chopper 71 alternately switches the detection state between the first state in which the first light L1 is allowed to proceed downstream and the second light L2 is restricted, and the second state in which the first light L1 is restricted and the second light L2 is allowed to proceed downstream, at high speed. In the first state, only the first light L1 is incident on the guide member 13. In the second state, only the second light L2 is incident on the guide member 13. The first light L1 and the second light L2 incident on the guide member 13 are, similarly to the first modification example, reflected or scattered by the object B, incident on the spectrometer 5, and spectrally separated and detected in the spectrometer 5. In the fifth modification example, since the detection state is alternately switched between the first state and the second state, the outputs of the first light L1 and the second light L2 emitted from the chopper 71 have a pulse waveform PW3. In this way, by the chopper 71 alternately restricting the first light L1 and the second light L2, the wavelength of light irradiated on the object B differs between the first state and the second state. In the fifth modification example, the light irradiation portion 3 constitutes the wavelength switching means by being configured such that the wavelength of light irradiated on the object B is variable.

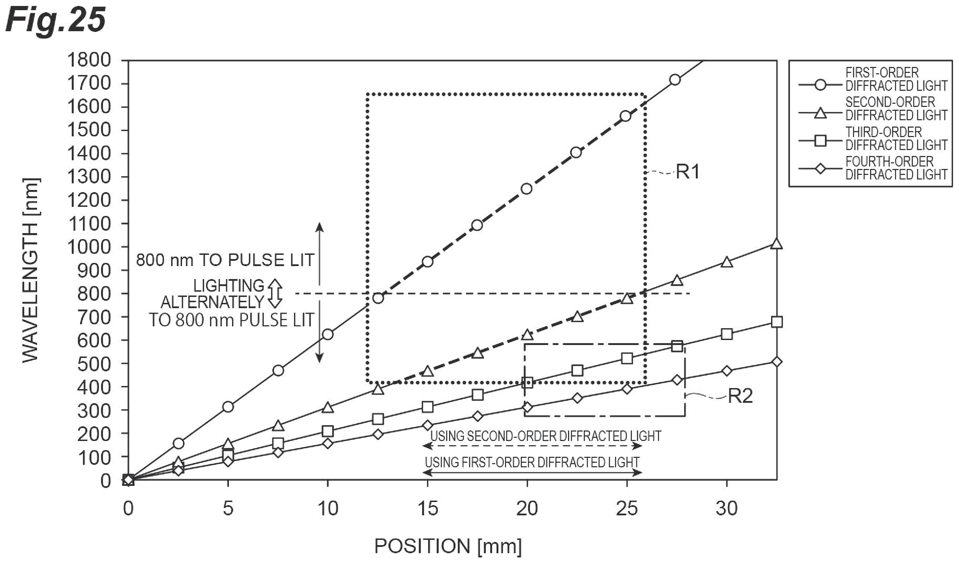

With reference to FIG. 25, the diffracted light detected by the light detection portion 34 in the first state and the second state will be described. In the first state, since only the first light L1 is incident on the spectrometer 5, only the first-order light of the first light L1 is detected by the light detection portion 34. On the other hand, in the second state, since only the second light L2 is incident on the spectrometer 5, only the second-order light of the second light L2 is detected by the light detection portion 34. In FIG. 25, the wavelength range detected only in the first state is indicated as "800 nm to pulse lit," and the wavelength range detected only in the second state is indicated as "to 800 nm pulse lit."

The spectroscopic detection method using the spectroscopic measurement system 1 according to the fifth modification example is performed in the same manner as the spectroscopic detection method using the spectroscopic measurement system 1 according to the above-described embodiment (FIG. 11). First, the chopper 71 alternately restricts the first light L1 and the second light L2 to alternately switch the detection state between the first state and the second state at high speed. In the first state, the chopper 71 allows the first light L1 to proceed downstream and restricts the second light L2, and the first-order light of the first light L1 is detected by the light detection portion 34 (step S11). In the second state, the chopper 71 restricts the first light L1 and allows the second light L2 to proceed downstream, and the second-order light of the second light L2 is detected by the light detection portion 34 (step S12). Subsequently, the processing portion 6 generates a spectroscopic image based on the first-order light of the first light L1 detected in step S11 and the second-order light of the second light L2 detected in step S12 (step S13).

With the fifth modification example as well, similarly to the above-described embodiment, light in a wide wavelength range can be spectrally separated and detected with sufficient diffraction efficiency, while also ensuring the dynamic range and wavelength resolution. In addition, in the spectroscopic measurement system 1 according to the fifth modification example, the chopper 71 restricts the second light L2 and allows the first light L1 to proceed downstream in the first state, and restricts the first light L1 and allows the second light L2 to proceed downstream in the second state. Accordingly, since only one of the first light L1 and the second light L2 proceeds downstream in each of the first state and the second state, the process of generating a spectroscopic image can be simplified compared to, for example, a case where both the first light L1 and the second light L2 proceed downstream in either the first state or the second state. In this example, since the first-order light of the first light L1 and the second-order light of the second light L2 are detected in separate detection states, the spectroscopic measurement system 1 can generate a spectroscopic image without performing step S33 shown in FIG. 21.

In the fifth modification example, the chopper 71 alternately restricted the first light L1 and the second light L2 to alternately switch the detection state between the first state and the second state at high speed; however, the chopper 71 need not switch the detection state at high speed. In addition, the chopper 71 need not switch the detection state alternately, and may, for example, switch the detection state between the first state and the second state once. In the fifth modification example, the light irradiation portion 3 included the chopper 71 capable of alternately restricting the first light L1 and the second light L2; however, the light irradiation portion 3 may include a light modulator or the like capable of alternately restricting the first light L1 and the second light L2 instead of the chopper 71.

### [Sixth Modification Example]

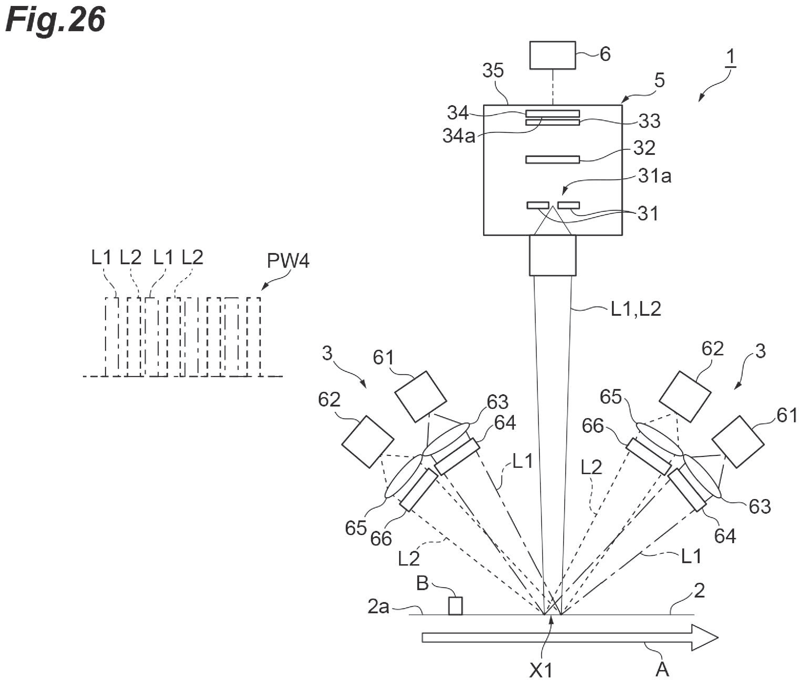

In the above-described fourth modification example shown in FIG. 23, the second light source 62 was pulse-driven; however, in the spectroscopic measurement system 1 according to the sixth modification example shown in FIG. 26, the on/off state is switched by pulse-driving each of the first light source 61 and the second light source 62. Accordingly, in the sixth modification example, the detection state is alternately switched between the first state and the second state at high speed. For this reason, the outputs of the first light L1 and the second light L2 have a pulse waveform PW4. In this example, the first light source 61 and the second light source 62 are LED light sources. In the first state, the first light source 61 is on and the second light source 62 is off. For this reason, in the first state, only the first light L1 is irradiated on the object B. In addition, in the second state, the first light source 61 is off and the second light source 62 is on. For this reason, in the second state, only the second light L2 is irradiated on the object B. In this way, the wavelength of light irradiated on the object B differs between the first state and the second state. In the sixth modification example, the light irradiation portion 3 constitutes the wavelength switching means by being configured such that the wavelength of light irradiated on the object B is variable.

The diffracted light detected in the first state and the second state of the sixth modification example is the same as that of the fifth modification example shown in FIG. 25. Namely, in the first state, the first-order light of the first light L1 is detected by the light detection portion 34. In the second state, the second-order light of the second light L2 is detected by the light detection portion 34.

The spectroscopic detection method using the spectroscopic measurement system 1 according to the sixth modification example is performed in the same manner as the spectroscopic detection method using the spectroscopic measurement system 1 according to the fifth modification example. First, the detection state is alternately switched between the first state and the second state at high speed by pulse-driving each of the first light source 61 and the second light source 62. In the first state, the first light source 61 is on and the second light source 62 is off, and the first-order light of the first light L1 is detected by the light detection portion 34 (step S11). In the second state, the first light source 61 is off and the second light source 62 is on, and the second-order light of the second light L2 is detected by the light detection portion 34 (step S12). Subsequently, the processing portion 6 generates a spectroscopic image based on the first-order light of the first light L1 detected in step S11 and the second-order light of the second light L2 detected in step S12 (step S13).

With the sixth modification example as well, similarly to the above-described embodiment, light in a wide wavelength range can be spectrally separated and detected with sufficient diffraction efficiency, while also ensuring the dynamic range and wavelength resolution. In addition, in the spectroscopic measurement system 1 according to the sixth modification example, in the first state, the first light source 61 is on and the second light source 62 is off, and in the second state, the first light source 61 is off and the second light source 62 is on. Accordingly, since only one of the first light source 61 and the second light source 62 is on in each of the first state and the second state, the process of generating a spectroscopic image can be simplified compared to, for example, a case where the first state and the second state are switched by turning one of the first light source and the second light source on/off while keeping the other on.

### [Seventh Modification Example]

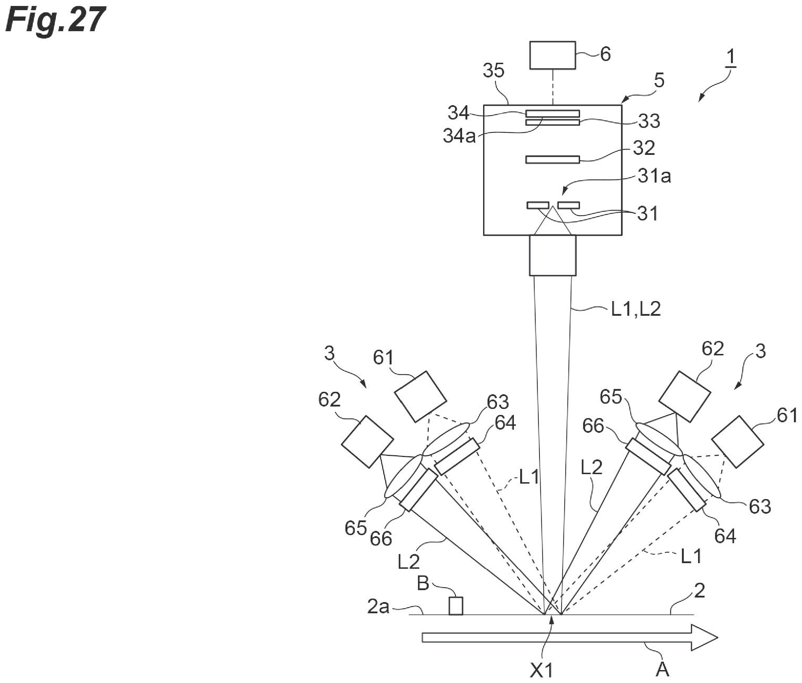

In the sixth modification example shown in FIG. 26, each of the first light source 61 and the second light source 62 was pulse-driven; however, in the spectroscopic measurement system 1 according to the seventh modification example shown in FIG. 27, both the first light source 61 and the second light source 62 are on in each of the first state and the second state. For this reason, in each of the first state and the second state, both the first light L1 and the second light L2 are irradiated on the object B. In this way, in the seventh modification example, the on/off state of neither the first light source 61 nor the second light source 62 is switched.

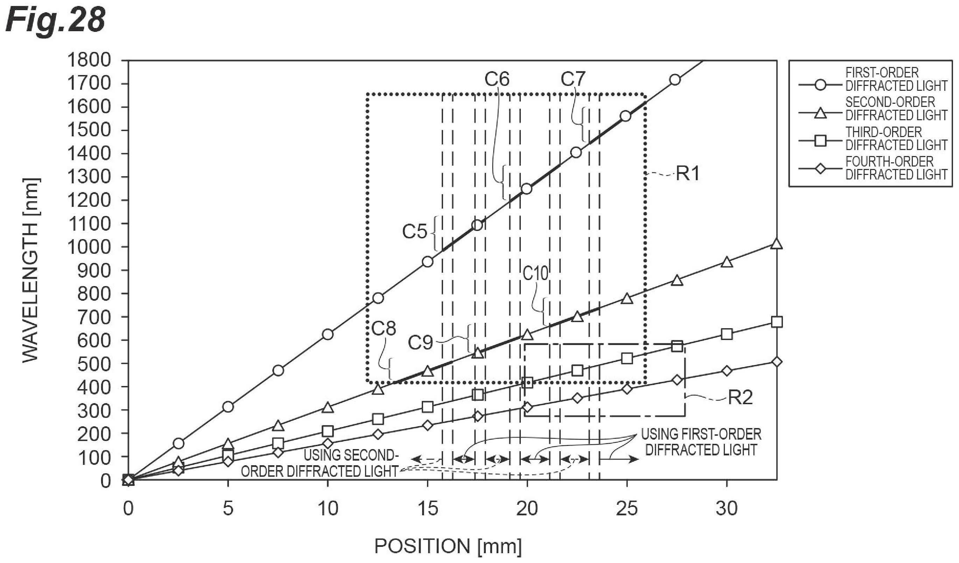

With reference to FIG. 28, the diffracted light detected by the light detection portion 34 in the first state and the second state will be described. The diffracted light detected in the first state and the second state is the same. In FIG. 28, an example is shown in which three first light sources 61 output light and three second light sources 62 output light.

The three first light sources 61 output the first light L1 having a wavelength in the first wavelength range (775 nm to 1650 nm). The three first light sources 61 output light in mutually different wavelength ranges. In this example, the three first light sources 61 output light in a fifth portion C5 (approximately 970 nm to approximately 1120 nm), a sixth portion C6 (approximately 1200 nm to approximately 1350 nm), and a seventh portion C7 (approximately 1420 nm to approximately 1600 nm) of the first wavelength range, respectively. Then, the light of the portions C5 to C7 of the first wavelength range is incident on the spectroscopic portion 32, and the first-order light of the fifth portion C5, the first-order light of the sixth portion C6, and the first-order light of the seventh portion C7 are detected by the light detection portion 34.

The three second light sources 62 output the second light L2 having a wavelength in the second wavelength range (387.5 nm to 825 nm). The three second light sources 62 output light in mutually different wavelength ranges. In this example, the three second light sources 62 output light in an eighth portion C8 (approximately 450 nm to approximately 500 nm), a ninth portion C9 (approximately 550 nm to approximately 600 nm), and a tenth portion C10 (approximately 650 nm to approximately 750 nm) of the second wavelength range, respectively. Then, the light of the portions C8 to C10 of the second wavelength range is incident on the spectroscopic portion 32, and the second-order light of the eighth portion C8, the second-order light of the ninth portion C9, and the second-order light of the tenth portion C10 are detected by the light detection portion 34.

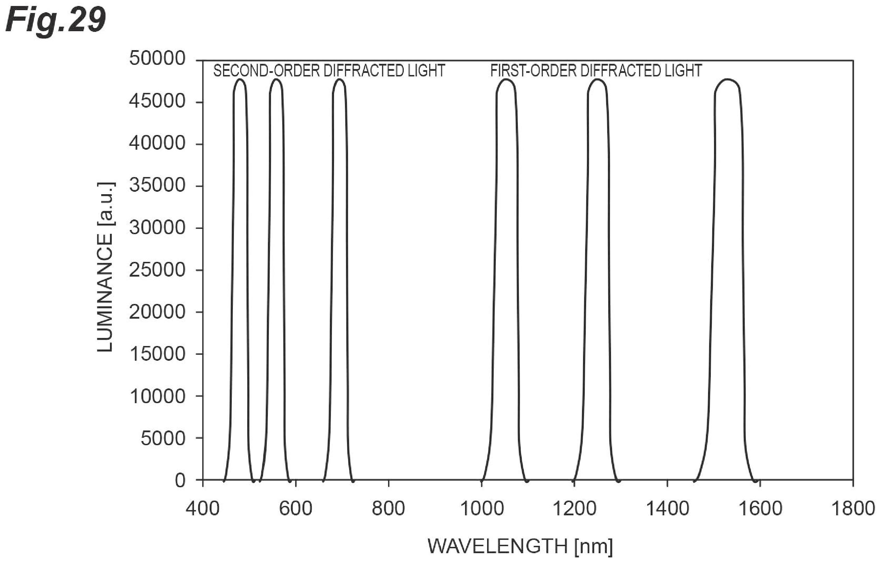

As shown in FIG. 29, the processing portion 6 generates a spectroscopic image for the first-order light of the fifth portion C5 of the first wavelength range, the first-order light of the sixth portion C6 of the first wavelength range, the first-order light of the seventh portion C7 of the first wavelength range, the second-order light of the eighth portion C8 of the second wavelength range, the second-order light of the ninth portion C9 of the second wavelength range, and the second-order light of the tenth portion C10 of the second wavelength range. Incidentally, as shown in FIG. 28, when there is a region on the light detection portion 34 where those lights are incident in an overlapping manner, the processing portion 6 does not use the luminance in the region as spectroscopic data.

As described above, the spectroscopic measurement system 1 according to the seventh modification example includes the light irradiation portion 3 that irradiates the object B with light, the spectroscopic portion 32 that spectrally separates the light emitted from the light irradiation portion 3 for irradiation and reflected or scattered by the object B, the light detection portion 34 that detects the light spectrally separated by the spectroscopic portion 32, the light detection portion 34 having sensitivity in the first wavelength range and the second wavelength range shorter than the first wavelength range, and the processing portion 6. The light irradiation portion 3 includes at least one (in this example, three) first light source 61 that outputs the first light L1 having a wavelength in the first wavelength range, and at least one (in this example, three) second light source 62 that outputs the second light having a wavelength in the second wavelength range. The first light L1 is incident on the spectroscopic portion 32 and the first-order light of the first light L1 is detected by the light detection portion 34, and the second light L2 is incident on the spectroscopic portion 32 and the second-order light of the second light L2 is detected by the light detection portion 34. The processing portion 6 generates a spectroscopic image based on the first-order light of the first light L1 and the second-order light of the second light L2 detected by the light detection portion 34.

With the seventh modification example as well, similarly to the above-described embodiment, a spectroscopic image can be generated using the first-order light and the second-order light which have a relatively high diffraction efficiency, and as a result, light in a wide wavelength range can be spectrally separated and detected with sufficient diffraction efficiency. In the seventh modification example, similarly to the sixth modification example, the on/off state may be switched by pulse-driving the three first light sources 61 and the on/off state may be switched by pulse-driving the three second light sources 62, so that the detection state is alternately switched between the first state and the second state. That is, in the first state, the three first light sources 61 may be on and the three second light sources 62 may be off, and in the second state, the three first light sources 61 may be off and the three second light sources 62 may be on. The number of the first light sources 61 may be any number of one or more, and the number of the second light sources 62 may be any number of one or more.

### [Eighth Modification Example]

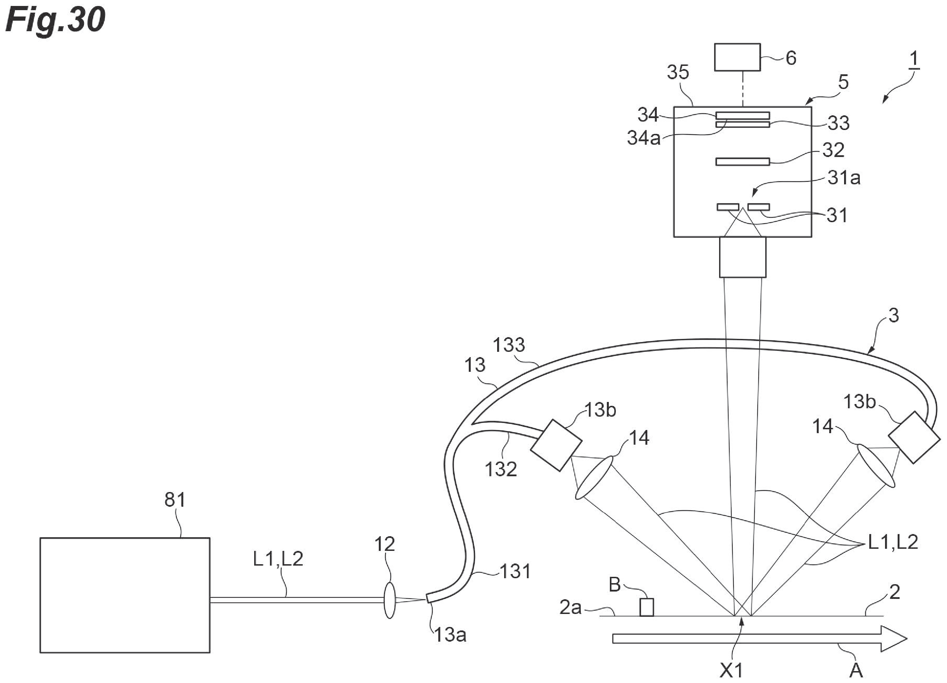

In the spectroscopic measurement system 1 according to the eighth modification example shown in FIG. 30, the light irradiation portion 3 includes a wavelength-tunable light source 81 (wavelength switching means) instead of the light source 11. The wavelength-tunable light source 81 is a light source capable of changing the output wavelength. The wavelength-tunable light source 81 outputs the first light L1 in the first state and outputs the second light L2 in the second state. Accordingly, in the first state, the first-order light of the first light L1 is detected by the light detection portion 34, and in the second state, the second-order light of the second light L2 is detected by the light detection portion 34. With the eighth modification example as well, similarly to the above-described embodiment, light in a wide wavelength range can be spectrally separated and detected with sufficient diffraction efficiency, while also ensuring the dynamic range and wavelength resolution. In addition, in the eighth modification example, the wavelength switching means can be constituted using the wavelength-tunable light source 81.

As another modification example, in the above-described embodiment, a spectroscopic image was generated based on the first-order light of the first light L1 detected in the first state and the second-order light of the second light L2 detected in the second state; however, a spectroscopic image may be generated based on the detection result in one of the first to fourth detection states. In this case, the processing portion 6 generates a spectroscopic image based on the first-order light of the first light L1 detected in the first state. Alternatively, the processing portion 6 generates a spectroscopic image based on the second-order light of the second light L2 detected in the second state. Alternatively, the processing portion 6 generates a spectroscopic image based on the first-order light of the first portion C1 of the third light L3 detected in the third state and the second-order light of the second portion C2 of the third light L3. Alternatively, the processing portion 6 generates a spectroscopic image based on the first-order light of the third portion C3 of the fourth light L4 detected in the fourth state and the second-order light of the fourth portion C4 of the fourth light L4.

That is, the spectroscopic measurement system 1 may be a spectroscopic measurement system that "includes the light irradiation portion 3 that irradiates the object B with light, the spectroscopic portion 32 that spectrally separates the light emitted from the light irradiation portion 3 for irradiation and reflected or scattered by the object B, the light detection portion 34 that detects the light spectrally separated by the spectroscopic portion 32, the light detection portion 34 having sensitivity in the first wavelength range and the second wavelength range shorter than the first wavelength range, and the processing portion 6, wherein the third light L3 including the first portion C1 having a wavelength in the first wavelength range and the second portion C2 having a wavelength in the second wavelength range is incident on the spectroscopic portion 32, and the first-order light of the first portion C1 of the third light L3 and the second-order light of the second portion C2 of the third light L3 are detected by the light detection portion 34, and the processing portion 6 generates a spectroscopic image based on the first-order light of the first portion C1 of the third light L3 and the second-order light of the second portion C2 of the third light L3 detected by the light detection portion 34." This corresponds to the case where the processing portion 6 generates a spectroscopic image based on the first-order light of the first portion C1 of the third light L3 detected in the third state and the second-order light of the second portion C2 of the third light L3.

Alternatively, the spectroscopic measurement system 1 may be a spectroscopic measurement system that "includes the light irradiation portion 3 that irradiates the object B with light, the spectroscopic portion 32 that spectrally separates the light emitted from the light irradiation portion 3 for irradiation and reflected or scattered by the object B, the light detection portion 34 that detects the light spectrally separated by the spectroscopic portion 32, the light detection portion 34 having sensitivity in the first wavelength range and the second wavelength range shorter than the first wavelength range, and the processing portion 6, wherein the fourth light L4 including the third portion C3 having a wavelength in the first wavelength range and the fourth portion C4 having a wavelength in the second wavelength range is incident on the spectroscopic portion 32, and the first-order light of the third portion C3 of the fourth light L4 and the second-order light of the fourth portion C4 of the fourth light L4 are detected by the light detection portion 34, and the processing portion 6 generates a spectroscopic image based on the first-order light of the third portion C3 of the fourth light L4 and the second-order light of the fourth portion C4 of the fourth light L4 detected by the light detection portion 34." This corresponds to the case where the processing portion 6 generates a spectroscopic image based on the first-order light of the third portion C3 of the fourth light L4 detected in the fourth state and the second-order light of the fourth portion C4 of the fourth light L4.

With the spectroscopic measurement system 1 according to these modification examples as well, similarly to the above-described embodiment, a spectroscopic image can be generated using at least one of the first-order light and the second-order light which have a relatively high diffraction efficiency, and as a result, light in a wide wavelength range can be spectrally separated and detected with sufficient diffraction efficiency.

The present disclosure is not limited to the above-described embodiment and modification examples. For example, the material and shape of each configuration are not limited to the material and shape described above, and various materials and shapes can be adopted.

In the above-described embodiment and each modification example, the first-order light of the first light L1 and the second-order light of the second light L2 were detected; however, the Nth-order diffracted light (Nth-order light) of the first light L1 and the Mth-order diffracted light (Mth-order light) of the second light L2 may be detected by the light detection portion 34. Here, N and M are integers other than 0 where the absolute value of N is smaller than the absolute value of M. For example, the second-order light of the first light L1 and the third-order light of the second light L2 may be detected by the light detection portion 34. Namely, N and M are not limited to 1 and 2, and may be 2 and 3, respectively. Alternatively, N and M may be -1 and -2, respectively. Namely, the -first-order light of the first light L1 and the - second-order light of the second light L2 may be detected by the light detection portion 34.

In the above-described embodiment and each modification example, the diffracted light blocking filter 33 blocked diffracted light other than the second-order light of the second light L2; however, the diffracted light blocking filter 33 may attenuate the diffracted light. However, when the diffracted light blocking filter 33 blocks the diffracted light, the second-order light of the second light L2 can be detected more reliably. The diffracted light blocking filter 33 may attenuate diffracted light other than the first-order light of the first light L1. The spectroscopic measurement system 1 need not include the diffracted light blocking filter 33.

The wavelength range of the irradiation light P1 and the first wavelength range and the second wavelength range are not limited to the above-described examples. In addition, the sensitivity wavelength range of the light detection portion 34 is not limited to the above-described examples. In the above-described embodiment, the light detection portion 34 had a plurality of pixels arranged along the direction corresponding to the spectroscopic direction and the direction perpendicular to the direction; however, the light detection portion 34 may have a plurality of pixels arranged only along the direction corresponding to the spectroscopic direction. In the light detection portion 34, the detection region that detects the first-order light of the first light in the first state was common to the detection region that detects the second-order light of the second light in the second state; however, the detection region that detects the first-order light may be different from the detection region that detects the second-order light.

In the above-described embodiment and each modification example, the first light L1 included only light in the first wavelength range; however, the first light L1 may further include light in the second wavelength range. Similarly, the second light L2 may further include light in the first wavelength range in addition to only light in the second wavelength range. In addition, the definitions of the first to fourth states in the above-described embodiment and each modification example are for convenience, and the definitions of the first, second, third, and fourth states are not limited thereto. For example, the third state in the above-described embodiment may be read as the first state. In this case, the above-described third light L3 is read as the first light, and the first light includes the first portion C1 of the first wavelength range and the second portion C2 of the second wavelength range. Similarly, the fourth state in the above-described embodiment may be read as the second state. In this case, the above-described fourth light L4 is read as the second light, and the second light includes the third portion C3 of the first wavelength range and the fourth portion C4 of the second wavelength range.

In the above-described embodiment and each modification example, the light emitted from the light irradiation portion 3 for irradiation and reflected or scattered by the object B was spectrally separated by the spectroscopic portion 32; however, the light emitted from the light irradiation portion 3 for irradiation and transmitted through the object B may be spectrally separated by the spectroscopic portion 32.

In the above-described embodiment and each modification example, the processing portion 6 generated spectroscopic data for the first-order light and the second-order light from the detection result of the first-order light of the first light L1 and the detection result of the second-order light of the second light L2, and generated a spectroscopic image based on the spectroscopic data; however, the processing portion 6 may execute only up to the generation of the spectroscopic data for the first-order light and the second-order light, and in this case, the processing portion 6 need not generate a spectroscopic image.

### Reference Signs List

1: spectroscopic measurement system, 3: light irradiation portion (wavelength switching means), 4: filter selection portion (wavelength switching means), 6: processing portion, 7: switching portion, 21: first filter, 22: second filter, 23: third filter, 24: fourth filter, 32: spectroscopic portion, 33: diffracted light blocking filter (filter), 34: light detection portion, 34a: light detection region, 41: switching filter, 51: light output portion, 54: light modulator (light restriction portion), 61: first light source, 62: second light source, 71: chopper (light restriction portion), 81: wavelength-tunable light source (wavelength switching means), B: object, C1: first portion, C2: second portion, C3: third portion, C4: fourth portion, L1: first light, L2: second light, L3: third light, L4: fourth light.

## Claims

1. A spectroscopic measurement system comprising:
a light irradiation portion that irradiates an object with light;
a spectroscopic portion that spectrally separates light from the object irradiated by the light irradiation portion;
a light detection portion that detects the light spectrally separated by the spectroscopic portion, the light detection portion having sensitivity in a first wavelength range and a second wavelength range shorter than the first wavelength range; and
a processing portion,
wherein the spectroscopic measurement system includes a wavelength switching means capable of switching a detection state between a first state in which at least a first light having a wavelength in the first wavelength range is incident on the spectroscopic portion and an Nth-order diffracted light of the first light is detected by the light detection portion, and a second state in which at least a second light having a wavelength in the second wavelength range is incident on the spectroscopic portion and an Mth-order diffracted light of the second light is detected by the light detection portion, where N and M are integers other than 0 where an absolute value of N is smaller than an absolute value of M, and
the processing portion generates spectroscopic data based on the Nth-order diffracted light of the first light detected in the first state and the Mth-order diffracted light of the second light detected in the second state.

2. The spectroscopic measurement system according to claim 1,
wherein the wavelength switching means is constituted by a filter selection portion that places, on an optical path, a filter selected from a plurality of selection filters including a first filter that transmits the first light and blocks light other than the first light and a second filter that transmits the second light and blocks light other than the second light, and
the first filter is placed on the optical path in the first state, and the second filter is placed on the optical path in the second state.

3. The spectroscopic measurement system according to claim 2,
wherein the wavelength switching means is capable of switching the detection state to a third state in addition to the first state and the second state, in which a third light including a first portion having a wavelength in the first wavelength range and a second portion having a wavelength in the second wavelength range is incident on the spectroscopic portion, and an Nth-order diffracted light of the first portion of the third light and an Mth-order diffracted light of the second portion of the third light are detected by the light detection portion, and
the processing portion generates the spectroscopic data further based on the Nth-order diffracted light of the first portion of the third light detected in the third state and the Mth-order diffracted light of the second portion of the third light.

4. The spectroscopic measurement system according to claim 2 or 3, further comprising:
a switching portion disposed upstream of the filter selection portion on the optical path,
wherein the switching portion includes a switching filter that transmits one of the first light and the second light and blocks light other than the one of the first light and the second light, and is capable of switching between a state in which the switching filter is placed upstream of the filter selection portion on the optical path and light other than the one of the first light and the second light is blocked, and a state in which the switching filter is not placed upstream of the filter selection portion on the optical path and both the first light and the second light are incident on the filter selection portion.

5. The spectroscopic measurement system according to claim 1,
wherein the light irradiation portion is configured such that a wavelength of light irradiated on the object is variable,
the wavelength switching means is constituted by the light irradiation portion, and the detection state is switched between the first state and the second state by changing the wavelength of light irradiated on the object from the light irradiation portion.

6. The spectroscopic measurement system according to claim 5,
wherein the light irradiation portion includes a first light source that outputs the first light and a second light source that outputs the second light, and
the detection state is switched between the first state and the second state by switching an on/off state of at least one of the first light source and the second light source.

7. The spectroscopic measurement system according to claim 6,
wherein in the first state, both the first light source and the second light source are on, and in the second state, the second light source is on and the first light source is off, or
in the first state, the first light source is on and the second light source is off, and in the second state, both the first light source and the second light source are on.

8. The spectroscopic measurement system according to claim 6,
wherein in the first state, the first light source is on and the second light source is off, and
in the second state, the first light source is off and the second light source is on.

9. The spectroscopic measurement system according to claim 5,
wherein the light irradiation portion includes a light output portion that outputs the first light and the second light separated from each other, and a light restriction portion disposed downstream of the light output portion on an optical path,
the light restriction portion is capable of restricting downstream progression of at least one of the first light and the second light output from the light output portion, and is capable of switching a restriction state of the at least one of the first light and the second light, and
the detection state is switched between the first state and the second state by switching the restriction state by the light restriction portion.

10. The spectroscopic measurement system according to claim 9,
wherein the light restriction portion restricts the second light and allows the first light to proceed downstream in the first state, and allows the first light and the second light to proceed downstream without restriction in the second state, or
the light restriction portion allows the first light and the second light to proceed downstream without restriction in the first state, and restricts the first light and allows the second light to proceed downstream in the second state.

11. The spectroscopic measurement system according to claim 9,
wherein the light restriction portion restricts the second light and allows the first light to proceed downstream in the first state, and restricts the first light and allows the second light to proceed downstream in the second state.

12. The spectroscopic measurement system according to any one of claims 1 to 11, further comprising:
a filter that is disposed between the spectroscopic portion and the light detection portion and that attenuates at least one of diffracted light other than the Nth-order diffracted light of the first light and diffracted light other than the Mth-order diffracted light of the second light.

13. The spectroscopic measurement system according to any one of claims 1 to 12,
wherein the absolute value of N is 1 and the absolute value of M is 2.

14. The spectroscopic measurement system according to any one of claims 1 to 13,
wherein the spectroscopic portion includes a spectroscopic element capable of spectrally separating at least light in a wavelength range of 1000 nm to 1500 nm into a first-order diffracted light.

15. The spectroscopic measurement system according to any one of claims 1 to 14,
wherein a detection region of the light detection portion that detects the Nth-order diffracted light of the first light in the first state is common to a detection region of the light detection portion that detects the Mth-order diffracted light of the second light in the second state.
